# EUROPEAN PATENT APPLICATION

(11) **EP 2 393 317 A1**
(43) Date of publication of application: **07.12.2011**
(21) Application number: 09839221.0
(22) Date of filing: 30.01.2009
(51) Int. Cl.: H04W 16/28, H04W 88/02

(54) **WIRELESS COMMUNICATION SYSTEM AND COMMUNICATION CONTROL METHOD**

(71) Applicant: Hitachi, Ltd., Chiyoda-ku Tokyo 100-8280 (JP)
(72) Inventor: FUJISHIMA, Kenzaburo, Tokyo 1008220 (JP); ONO, Go, Tokyo 1008220 (JP); TAKADA, May, Tokyo 1008220 (JP); UWANO, Koki, Tokyo 1008220 (JP)
(74) Representative: MERH-IP Matias Erny Reichl Hoffmann
(86) International application number: PCT/JP2009/052008
(87) International publication number: WO 2010/087031

(57) **Abstract**

It is provided a wireless communication system comprising base stations that communicate with a terminal. Each of the base station has antennas. Each of the base stations transmits a first reference signal unique to each of the antennas which does not overlap with another antenna among the base stations at least in a vicinity thereof. The terminal receives the first reference signal and estimates a received power of the first reference signal for each of the antennas, selects antennas suitable for communication from among the antennas based on a result of estimating the received power, and transmits a result of selecting the antennas to the each of the base stations. The each of the base stations refers the result of selecting the antennas transmitted from the terminal, assigns the selected antennas belonging to different cells to the terminal, and notifies the terminal of a result of assigning the antennas.

## Description

### BACKGROUND OF THE INVENTION

This invention relates to a wireless communication system, in particular, a wireless communication system in which a terminal communicates with a plurality of base stations.

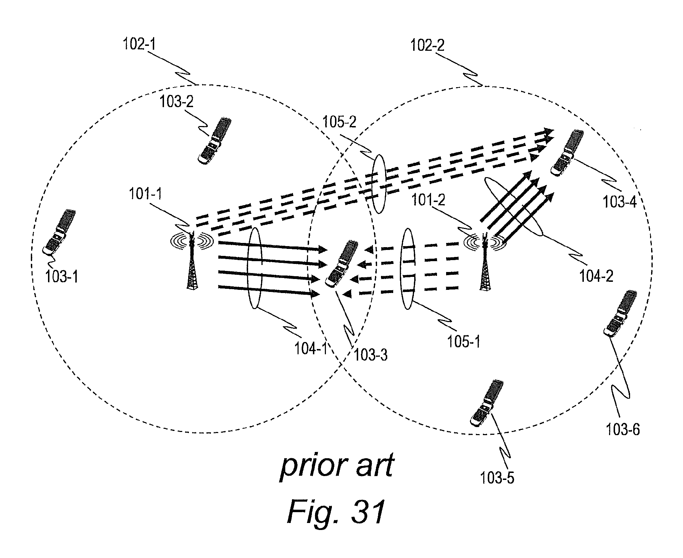

FIG. 31 is a diagram illustrating a conventional cellular system.

Two base stations 101-1 and 101-2 form cells 102-1 and 102-2, respectively. Three terminals 103-1, 103-2, and 103-3 within the cell 102-1 communicate with the base station 101-1, and three terminals 103-4, 103-5, and 103-6 within the cell 102-2 communicates with the base station 101-2.

Each of the base stations and each of the terminals include a plurality of antennas. Each of the base stations performs multiple input multiple output (MIMO) communication with one terminal belonging to a cell formed by the base station at a given instant. It should be noted that in a multicarrier communication system such as an orthogonal frequency division multiple access (OFDMA), it is possible to perform the MIMO communication with different terminals through each of carriers owing to orthogonality exhibited by the respective carriers with respect to each other, but for the sake of simplicity, the description here is based on the assumption that a single-carrier communication system is used.

FIG. 31 indicates a snapshot obtained at a given time instant, in which the base station 101-1 is performing single-user MIMO communication with the terminal 103-3 by using a desired signal 104-1, while the base station 101-2 is performing the single-user MIMO communication with the terminal 103-4 by using a desired signal 104-2. It is decided that the single-user MIMO communication is employed by a cellular system of so-called 3.9 generation, and a protocol therefor is disclosed in "Physical layer procedures (Release 8)", 3GPP TSG RAN, 3GPP TS36.213 ver8.4.0, pp. 18-43, September 2008.

However, a radio signal also reaches another terminal, thereby causing interference due to leakage of the radio signal. Specifically, an interference signal 105-1 is generated by the interference from the base station 101-2 with respect to the terminal 103-3, and an interference signal 105-2 is generated by the interference from the base station 101-1 with respect to the terminal 103-4.

As in a case of the terminal 103-4, in a state in which there is a large difference between a propagation distance of the desired signal 104-2 and the propagation distance of the interference signal 105-2, the interference is not a problem owing to propagation attenuation of the interference signal 105-2. However, as in a case of the terminal 103-3, in a state in which there is a small difference between the propagation distance of the desired signal 104-1 and the propagation distance of the interference signal 105-1, an amount of the propagation attenuation is approximately the same between the desired signal 104-1 and the interference signal 105-1, and hence a difference between an electric field intensity of the desired signal 104-1 and an electric field intensity of the interference signal 105-1 is small. Therefore, inter-cell interference becomes a serious problem.

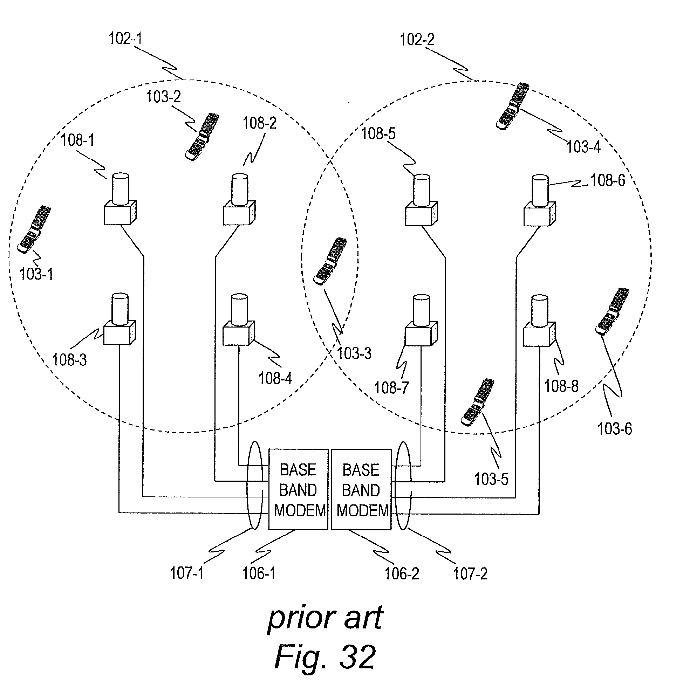

FIG. 32 is an explanatory diagram of a cellular system which has been a focus of attention in recent years. As a wireless communication system that solves the problem of the above-mentioned inter-cell interference, a system illustrated in FIG. 32 is disclosed in "Inter-cell Radio Resource Management for Heterogeneous Network", NTT DoCoMo, 3GPP TSG RAN WG1, R1-083019, August 2008.

Baseband modems 106-1 and 106-2 conventionally placed in the base stations are placed in sites other than cells 102-1 and 102-2, and remote radio units (RRUs) 108-1 to 108-8 being simple radio transmitters/receivers are located in the cells.

As the first characteristic of the above-mentioned arrangement, signals can be processed cooperatively between the cells by centralizing the baseband modems 106-1 and 106-2, thereby enabling reduction in the inter-cell interference. Further, as the second characteristic, RRUs 108-1 to 108-8 are located by being spread out in a plane in order to ensure cell coverage. In addition, as the third characteristic, the baseband modems 106-1 and 106-2 and the RRUs 108-1 to 108-8 are coupled to each other through optical fibers 107-1 and 107-2, and a baseband signal is transmitted between the baseband modems 106-1 and 106-2 and the RRUs 108-1 to 108-8 according to the common public radio interface (CPRI) standard. It should be noted that in this system, the cell 102-1 is formed by four RRUs 108-1, 108-2, 108-3, and 108-4 managed by the baseband modem 106-1. In the same manner, the cell 102-2 is formed by four RRUs 108-5, 108-6, 108-7, and 108-8 managed by the baseband modem 106-2.

In other words, according to the system illustrated in FIG. 32, by centralizing the baseband modems 106-1 and 106-2, baseband signals can be processed cooperatively between the cells 102-1 and 102-2 with ease, and it is possible to easily realize network MIMO in which the terminal communicates with a plurality of base stations.

### SUMMARY OF THE INVENTION

As described above, it is effective in reducing the inter-cell interference to select antennas desired for the terminal (antennas having a short propagation distance to the terminal), and hence the network MIMO is effective in reducing the inter-cell interference and improving communication quality. In other words, in order to reduce the inter-cell interference with respect to the terminal 103-3 at a cell boundary, it is desired to communicate with the RRUs 108-2, 108-4, 108-5, and 108-7 having a short propagation distance. However, of the selected four RRUs, two RRUs 108-2 and 108-4 are managed by the baseband modem 106-1, and the other two RRUs 108-5 and 108-7 are managed by the baseband modem 106-2. According to a conventional protocol, with one cell set as a serving cell, the terminal can only communicate by using antennas within the cell (with RRUs controlled by one baseband modem), and cannot select antennas across a plurality of cells.

However, there has been proposed no specific communication procedure for selecting antennas across a plurality of cells in order to realize the network MIMO. In particular, it is important in producing an effect of the network MIMO to select antennas optimum for the terminal without limitation of the cell boundary, but there has been proposed no specific method regarding the selecting of the antennas. In other words, up to now, there has been proposed no specific procedure for improving the communication quality of the terminal in the vicinity of the cell boundary by assigning the antennas of a plurality of base stations to the terminal in the vicinity of the cell boundary.

An object of this invention is to provide a specific procedure for assigning base station antennas optimum for a terminal without limitation of a cell boundary in order to reduce inter-cell interference that causes degradation of communication quality in a wireless communication system.

A representative aspect of this invention is as follows. That is, there is provided a wireless communication system comprising a plurality of base stations that provide a plurality of cells respectively and communicate with a terminal. Each of the plurality of base stations has a plurality of antennas. Each of the plurality of base stations transmits a first reference signal unique to each of the plurality of antennas which does not overlap with another antenna among the plurality of base stations at least in a vicinity thereof. The terminal receives the first reference signal and estimates a received power of the first reference signal for each of the plurality of antennas; selects antennas suitable for communication from among the plurality of antennas based on a result of estimating the received power; and transmits a result of selecting the antennas to the each of the plurality of base stations. The each of the plurality of base stations refers the result of selecting the antennas transmitted from the terminal and assigns the selected antennas belonging to different cells to the terminal; and notifies the terminal of a result of assigning the antennas.

Another aspect of this invention is a wireless communication system comprising a plurality of base stations that provide a plurality of cells respectively and communicate with a terminal. Each of the plurality of base stations has a plurality of antennas. The terminal transmits a second reference signal unique to the terminal. Each of the plurality of base stations receives the second reference signal and estimates a received power of the second reference signal for each of the plurality of antennas; selects antennas suitable for communication from among the plurality of antennas based on a result of estimating the received power; refers a result of selecting the antennas and assigns the selected antennas belonging to different cells to the terminal; and notifies the terminal of a result of assigning the antennas.

According to the embodiment of this invention, it is possible to reduce the inter-cell interference. Accordingly, it is possible to improve the communication quality of the terminal in the vicinity of the cell boundary. In other words, it is possible to improve frequency usage efficiency at the cell boundary and to reduce the gap of quality between services provided terminals.

### BRIEF DESCRIPTION OF THE DRAWINGS

FIG. 1 is a diagram illustrating a network configuration of a wireless communication system according to a first embodiment of this invention.
FIG. 2 is a diagram illustrating a configuration of the wireless communication system according to the first embodiment of this invention.
FIG. 3A is a block diagram illustrating a configuration in the case where a baseband modem and an RRU are coupled by an optical fiber according to the first embodiment of this invention.
FIG. 3B is a block diagram illustrating a configuration of in the case where the baseband modem and the RRU are coupled by a coaxial cable according to the first embodiment of this invention.
FIG. 3C is a block diagram illustrating a configuration of the case where the baseband modem and the RRU are coupled by a radio link according to the first embodiment of this invention.
FIG. 4 is a sequence diagram illustrating operations of respective nodes performed at a time of a downlink communication in the wireless communication system according to the first embodiment of this invention.
FIG. 5 is a sequence diagram illustrating operations of respective nodes performed at a time of an uplink communication in the wireless communication system according to the first embodiment of this invention.
FIG. 6 is a block diagram illustrating the baseband modem and a configuration of neighboring components according to the first embodiment of this invention.
FIG. 7 is a block diagram illustrating a configuration of a baseband signal generation module according to the first embodiment of this invention.
FIG. 8 is a block diagram illustrating a configuration of a data/control signal separation module according to the first embodiment of this invention.
FIG. 9 is a block diagram illustrating a long term average power estimation module according to the first embodiment of this invention.
FIG. 10 is a block diagram illustrating a modem control module according to the first embodiment of this invention.
FIG. 11 is an explanatory diagram illustrating contents stored in a PAI buffer according to the first embodiment of this invention.
FIG. 12 is an explanatory diagram illustrating content stored in a power estimation result buffer according to the first embodiment of this invention.
FIG. 13 is a block diagram illustrating a configuration of a terminal according to the first embodiment of this invention.
FIG. 14A is an explanatory diagram illustrating RRU assignment information notified from the base station to the terminal according to the first embodiment of this invention.
FIG. 14B is an explanatory diagram illustrating RRU assignment information notified from the base station to the terminal according to the first embodiment of this invention.
FIG. 15 is a flowchart illustrating a processing common to a downlink RRU mapping module and an uplink RRU mapping module according to the first embodiment of this invention.
FIG. 16 is an explanatory diagram illustrating RRU assignment results according to the first embodiment of this invention.
FIG. 17 is a flowchart illustrating a modified example of a processing common to the downlink RRU mapping module and the uplink RRU mapping module according to the first embodiment of this invention.
FIG. 18 is an explanatory diagram of RRU assignment results according to the first embodiment of this invention.
FIG. 19A is an explanatory diagram illustrating content of PAI feedback according to the first embodiment of this invention.
FIG. 19B is an explanatory diagram illustrating the content of PAI feedback according to the first embodiment of this invention.
FIG. 19C is an explanatory diagram illustrating the content of PAI feedback according to the first embodiment of this invention.
FIG. 20A is an explanatory diagram illustrating layout examples of RRU specific reference signal according to the first embodiment of this invention.
FIG. 20B is an explanatory diagram illustrating another layout examples of RRU specific reference signal according to the first embodiment of this invention.
FIG. 20C is an explanatory diagram illustrating another layout examples of RRU specific reference signal according to the first embodiment of this invention.
FIG. 21A is an explanatory diagrams illustrating effects of the first embodiment of this invention.
FIG. 21B is an explanatory diagrams illustrating effects of the first embodiment of this invention.
FIG. 22 is a diagram illustrating a network configuration of a wireless communication system according to a second embodiment of this invention.
FIG. 23 is a sequence diagram illustrating operations of respective nodes performed at a time of a downlink communication in the wireless communication system according to the second embodiment of this invention.
FIG. 24 is a sequence diagram illustrating operations of respective nodes performed at a time of a uplink communication in the wireless communication system according to the second embodiment of this invention.
FIG. 25 is a block diagram illustrating a baseband modem and a configuration of neighboring components according to the second embodiment of this invention.
FIG. 26 is a block diagram illustrating a configuration of a baseband signal generation module according to the second embodiment of this invention.
FIG. 27 is a block diagram illustrating a configuration of a modem-RRU switch according to the second embodiment of this invention.
FIG. 28 is an explanatory diagram illustrating RRU assignment results according to the second embodiment of this invention.
FIG. 29 is an explanatory diagram illustrating RRU assignment results according to the second embodiment of this invention.
FIG. 30 is an explanatory diagram illustrating RRU assignment results according to the second embodiment of this invention.
FIG. 31 is a diagram illustrating a conventional cellular system.
FIG. 32 is an explanatory diagram of a cellular system which has been a focus of attention in recent years.

### DETAILED DESCRIPTION OF THE PREFERRED EMBODIMENTS

### (First embodiment)

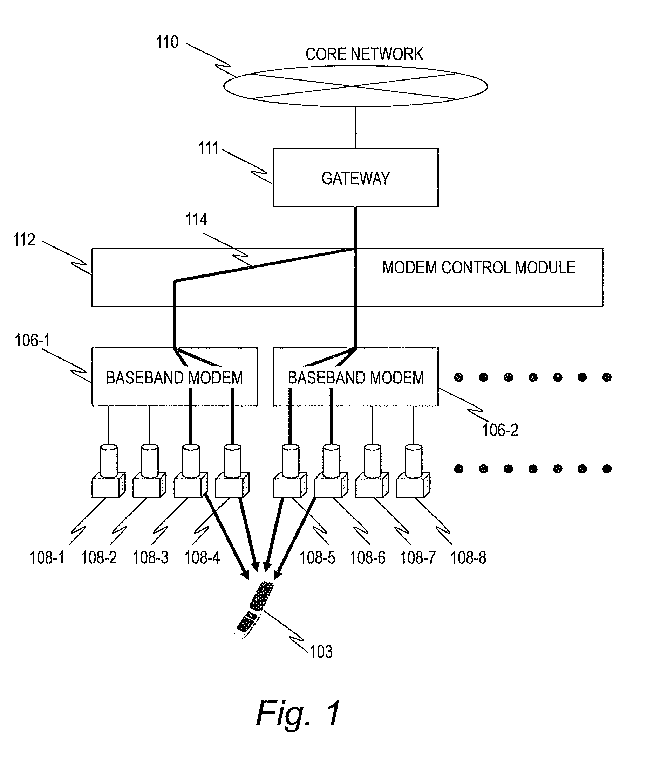

FIG. 1 is a diagram illustrating a network configuration of a wireless communication system according to a first embodiment.

The wireless communication system according to the first embodiment includes a gateway 111, modem control module 112, baseband modems 106-1, 106-2, ... (hereinafter, referred to simply as "106" if distinction between the baseband modems is not necessary), and remote radio units (RRUs) 108-1, 108-2, ... (hereinafter, referred to simply as "108" if distinction between the RRUs is not necessary). The wireless communication system according to this embodiment is provided with a plurality of baseband modems 106, but may be provided with one baseband modem 106. Further, the wireless communication system according to this embodiment is provided with a plurality of RRUs 108, but in the case of being provided with the plurality of baseband modems 106, may be provided with one RRU 108 for each of the baseband modems 106.

The gateway 111 is a node for coupling a core network 110 and a wireless access network (lower layer than the gateway 111) to each other and terminating the wireless access network, and converts a protocol between networks.

The modem control module 112 controls a data flow between the gateway 111 and the baseband modem 106. It should be noted that the appropriate RRU 108 differs from one terminal 103 to another terminal 103, and hence the RRUs 108 to which data is transferred is managed for each of the terminals 103. For such control, a processor (such as CPU or DSP) and a logic circuit (such as ASIC or FPGA) may be used. The modem control module 112 manages the plurality of baseband modems 106-1, 106-2, ...

The baseband modem 106 is a device that converts the protocol between an IP packet and a radio baseband signal. For such protocol conversion, in the same manner as the modem control module 112, at least one of the processor and the logic circuit may be used. A protocol for a radio signal conforms to a standard defined by a standards body (for example, the long term evolution (LTE) disclosed in "Inter-cell Radio Resource Management for Heterogeneous Network" described above).

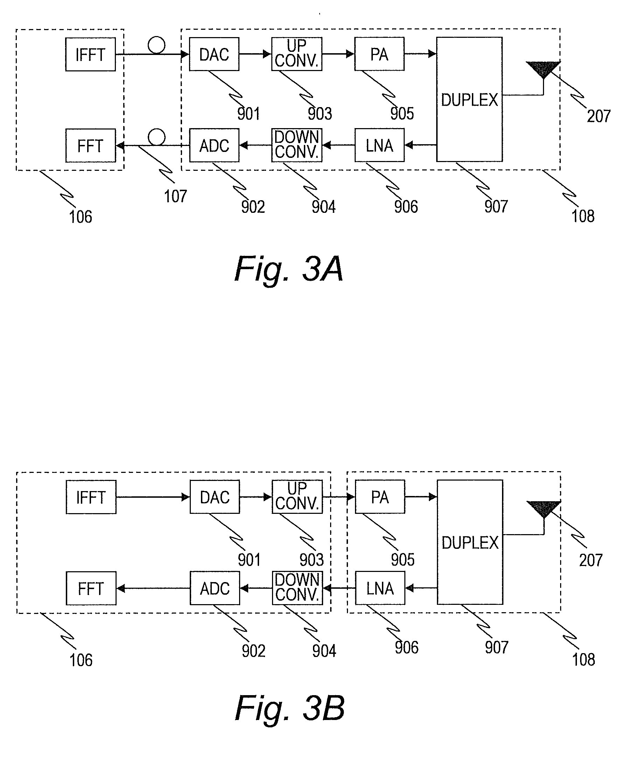

Each of the baseband modems 106 manages a plurality of RRUs 108. The baseband modem 106 and the RRU 108 are coupled to each other by an optical fiber or a coaxial cable. It should be noted that the baseband modem 106 and the RRU 108 may both include a radio communication device and may be coupled to each other by a radio link instead of the wired coupling using a cable or the like. The coupling between the baseband modem 106 and the RRU 108 is described below with reference to FIGS. 3A to 3C. A baseband signal is transmitted between the baseband modem 106 and the RRU 108 according to the common public radio interface (CPRI) standard.

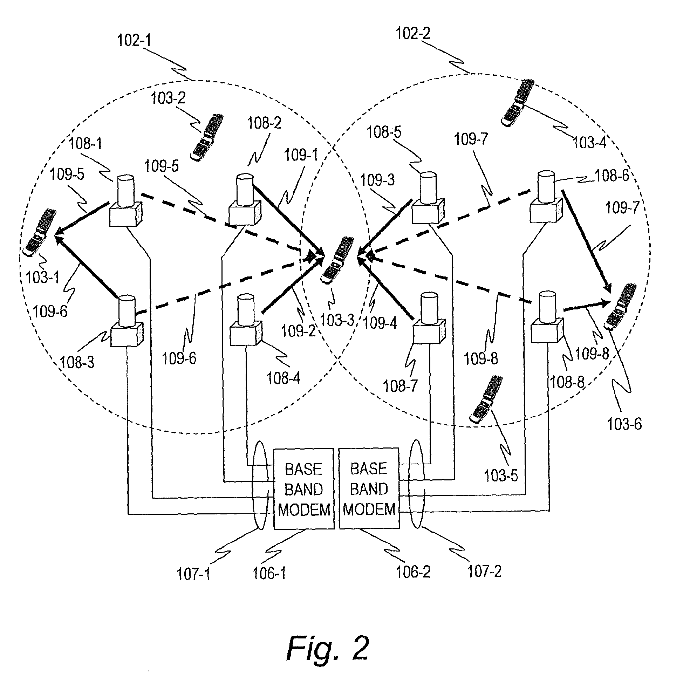

FIG. 2 is a diagram illustrating a configuration of the wireless communication system according to the first embodiment of this invention.

A plurality of RRUs 108-1, 108-2, 108-3, and 108-4 form a cell 102-1, and perform radio communication with terminals within the cell 102-1. In other words, three terminals 103-1, 103-2, and 103-3 within the cell 102-1 each communicate with at least one of the RRUs 108-1, 108-2, 108-3, and 108-4.

In addition, a plurality of RRUs 108-5, 108-6, 108-7, and 108-8 form a cell 102-2, and perform radio communication with terminals within the cell 102-2. In other words, four terminals 103-3, 103-4, 103-5, and 103-6 within the cell 102-2 each communicate with at least one of the RRUs 108-5, 108-6, 108-7, and 108-8.

Each of base stations and each of the terminals include a plurality of antennas. Each of the base stations performs multiple input multiple output (MIMO) communication with one terminal belonging to a cell formed by the base station at a given instant. It should be noted that in a multicarrier communication system such as orthogonal frequency division multiple access (OFDMA), it is possible to perform the MIMO communication with different terminals through each of carriers owing to orthogonality exhibited by the respective carriers with respect to each other, but in the following description, for the sake of simplicity thereof, a single-carrier communication system is described. It should be noted that this invention can be applied to the multicarrier communication system.

The RRUs 108-1 to 108-8 are located by being spread out in a plane in order to ensure cell coverage.

It should be noted that in the system illustrated in FIG. 2, the cell 102-1 is formed by the four RRUs 108-1, 108-2, 108-3, and 108-4 managed by the baseband modem 106-1. In the same manner, the cell 102-2 is formed by the four RRUs 108-5, 108-6, 108-7, and 108-8 managed by the baseband modem 106-2.

FIGS. 3A to 3C are block diagrams illustrating a configuration of the baseband modem 106 and the RRU 108 according to the first embodiment in cases where the baseband modem 106 and the RRU 108 are coupled to each other using the respective methods described above.

FIG. 3A illustrates the configuration in the case where the baseband modem 106 and the RRU 108 are coupled by an optical fiber. As illustrated in FIG. 3A, the RRU 108 includes a DAC 901, an ADC 902, an up converter 903, a down converter 904, a power amplifier 905, a low noise amplifier 906, a duplexer 907, and an antenna 207.

The DAC 901 converts an analog signal into a digital signal. The ADC 902 converts a digital signal into an analog signal. The up converter 903 converts a baseband signal into a radio frequency signal. The down converter 904 converts a radio frequency signal into a baseband signal. The power amplifier 905 amplifies a transmission signal. The low noise amplifier 906 amplifies a received signal. The duplexer 907 separates a downlink signal and an uplink signal from each other.

FIG. 3B illustrates the configuration of in the case where the baseband modem 106 and the RRU 108 are coupled by a coaxial cable. As illustrated in FIG. 3B, the baseband modem 106 includes the DAC 901, the ADC 902, the up converter 903, and the down converter 904, and the RRU 108 includes the power amplifier 905, the low noise amplifier 906, the duplexer 907, and the antenna 207. The respective components included in the baseband modem 106 and the RRU 108 are the same as those described with reference to FIG. 3A.

As described above, in the case where the baseband modem 106 and the RRU 108 are coupled to each other by a coaxial cable, the system can be configured at low cost because the configuration of the RRU 108 becomes simpler than in the case where the baseband modem 106 and the RRU 108 are coupled to each other by the optical fiber. However, the coupling using the coaxial cable is suitable for short-distance transmission because a signal loss due to the coaxial cable is larger than the coupling using the optical fiber.

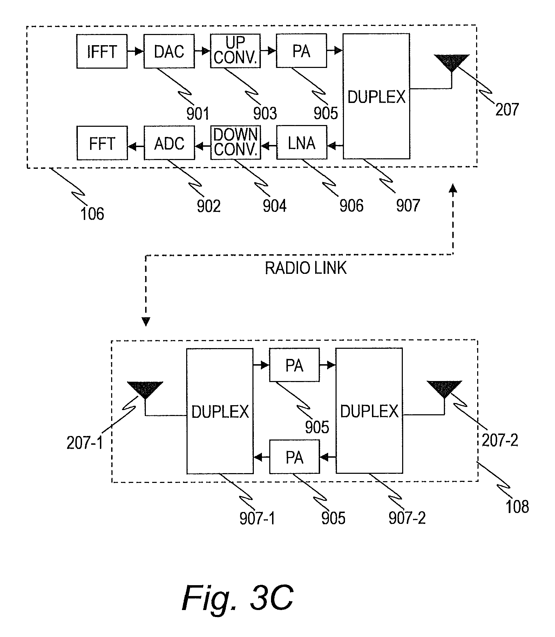

FIG. 3C illustrates the configuration of the case where the baseband modem 106 and the RRU 108 are coupled by a radio link. As illustrated in FIG. 3C, the baseband modem 106 includes the DAC 901, the ADC 902, the up converter 903, the down converter 904, the power amplifier 905, the low noise amplifier 906, the duplexer 907, and the antenna 207.

The RRU 108 can be configured by a simple repeater. Such an RRU 108 is particularly called "relay node". Specifically, the RRU 108 includes an antenna 207-1 and a duplexer 907-1 that are used for radio communication with the baseband modem, an antenna 207-2 and a duplexer 907-2 that are used for radio communication with the terminal, and two power amplifiers 905 for respectively amplifying a signal for uplink communication and a signal for downlink communication. In a case of decoding the received signal while relaying the radio communication between the baseband modem and the terminal, it is necessary for the RRU 108 to include a baseband modem.

As described above, in the case where the baseband modem 106 and the RRU 108 are coupled to each other by the radio link, the configuration of the devices is complicated, but there is no need to lay a cable between the baseband modem 106 and the RRU 108.

In the configuration example illustrated in FIG. 1, the terminal 103 favorably uses the RRUs 108-3, 108-4, 108-5, and 108-6 in order to shorten a propagation distance between the terminal 103 and the RRUs 108. Of those, the RRUs 108-3 and 108-4 are coupled to the baseband modem 106 different from that of the RRU 108-5 and 108-6. However, the modem control module 112 controls a data flow to generate a data flow 114 desirable for the terminal 103. A method of generating the data flow 114 is described later in detail. The data flow 114 indicates a data flow of the downlink communication, but the same data flow can be defined for the uplink communication.

Next, operations of the respective nodes of the wireless communication system according to the first embodiment are described.

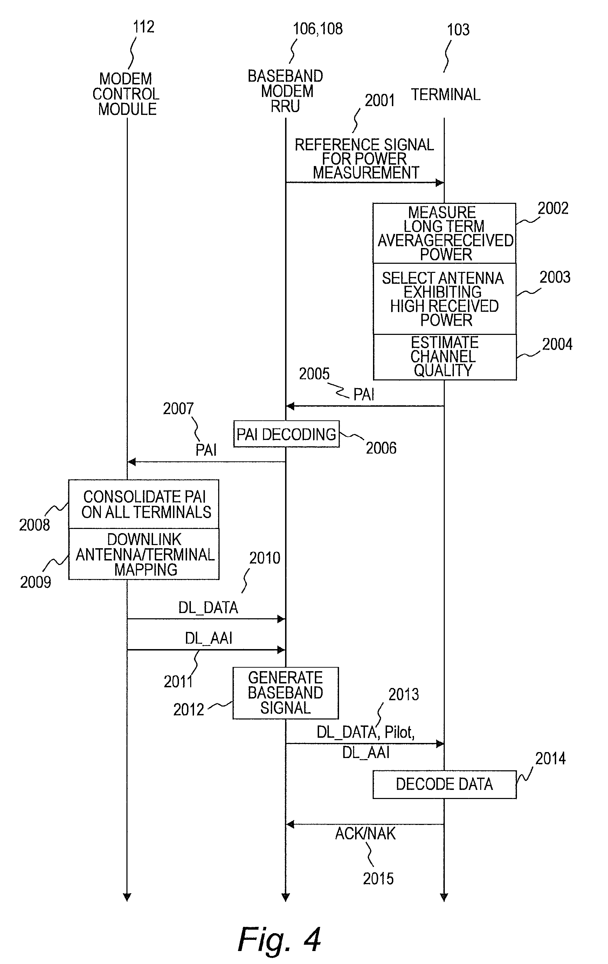

FIG. 4 is a sequence diagram illustrating the operations of the respective nodes performed at a time of the downlink communication in the wireless communication system according to the first embodiment.

The baseband modem 106 broadcasts a reference signal for power measurement specific to the RRU 108 to the terminal 103 via the RRU 108 in a wireless manner (2001).

The terminal 103 uses the reference signals for power measurement received from a plurality of RRUs 108 to measure the received powers of the reference signal for power measurement for each of the RRUs 108 (2002). In estimating the received power, the terminal 103 measures an average received power over a long term for each of the RRUs 108 in order to prevent a propagation path from being erroneously selected due to short-interval fluctuations (fading). Specifically, it is desired that a time (long term) for averaging the received powers be set approximately 10 times as large as the inverse of a Doppler frequency due to the fading.

After completing the measurement of the received powers, the terminal 103 compares received-power measurement results among the RRUs 108, and selects *N* RRUs 108 in descending order of the measurement results (2003). The number *N* is an arbitrary integer which is not negative.

The terminal 103 uses the reference signal for power measurement to estimate communication quality (for example, channel quality (CQ)) that can be ensured by each of the selected RRUs 108 or a combination thereof (2004).

The terminal 103 transmits information indicating the selected RRUs 108 and estimated communication quality which is obtained by the selected RRUs 108 (or a combination of the selected RRUs 108) (for example, channel quality indicators (CQIs)) to the baseband modem 106 on a base station side as an uplink control signal (preferred antenna information (PAI)) (2005).

The baseband modem 106 decodes the PAI included in the control signal transmitted from the terminal 103 (2006), and transmits a decoding result to the modem control module 112 (2007).

The modem control module 112 consolidates the PAI on at least one terminal 103 transmitted from at least one baseband modem 106 (2008), assigns the RRUs to each terminal 103 based on the consolidated PAI (2009), and instructs at least one baseband modems 106 to perform data communication according to RRU assignment results (2010).

Then, the modem control module 112 transmits RRU assignment information (antenna assign information (AAI)) indicating the RRU assignment results with respect to the terminal and a modulation and coding scheme (MCS) used by each of the RRUs assigned to each terminal (2011).

It should be noted that the case of the downlink communication is illustrated in FIG. 4, but the same applies to the case of the uplink communication (uplink) except that "DL" is replaced by "UL" in FIG. 4.

The baseband modem 106 generates a baseband signal based on the data 2010 and the AAI 2011, which are addressed to each terminal and transmitted from the modem control module 112, by inserting a control signal or a reference signal as necessary (2012), and the RRU 108 up-converts the generated baseband signal into a radio frequency band, and broadcasts the up-converted signal to the terminals 103 (2013). It should be noted that the reference signal for power measurement that is used to select the RRU 108 may be transmitted simultaneously with the data and AAI addressed to each terminal.

The terminal 103 receives the broadcast signal, decodes the data included in the signal addressed to the own terminal (2014), and transmits a response ACK or NAK according to a CRC check result to the baseband modem 106 (2015).

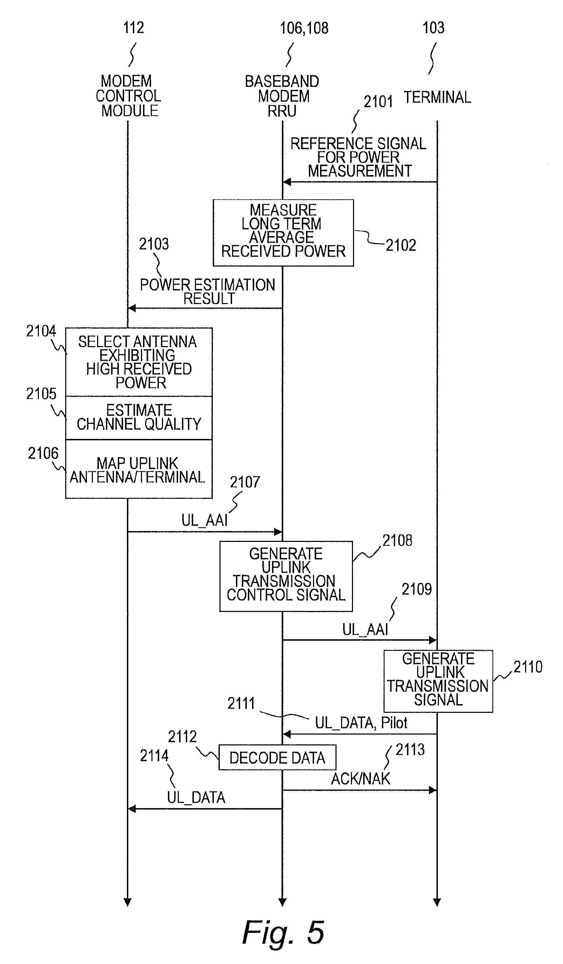

FIG. 5 is a sequence diagram illustrating the operations of the respective nodes performed at a time of the uplink communication in the wireless communication system according to the first embodiment.

The baseband modem 106 receives a reference signal (sounding reference signal (SRS)) repeatedly transmitted from the terminal 103 via the RRU 108 regardless of the presence/absence of data transmitted from the terminal 103 (2101), and uses the received reference signal as the reference signal for power measurement to measure a long term average SRS received power of each terminal 103 for each RRU 108 (2102). In the same manner as the above-mentioned operation at the time of the downlink communication illustrated in FIG. 4, a period for averaging the received powers is set based on the Doppler frequency due to the fading. The SRS is disclosed in "Physical Channels and Modulation (Release 8)", 3GPP TSG RAN, 3GPP TS36.211 ver8.4.0, pp. 27-30, September 2008. The baseband modem 106 transmits the received-power measurement results to the modem control module 112 (2103).

The modem control module 112 compares the received-power measurement results among the RRUs 108 for each terminal 103, and selects *N* RRUs 108 in descending order of the measurement results (2104). The number *N* of the selected RRUs 108 is an arbitrary integer which is not negative, and may be determined in the same manner as the operation at the time of the downlink communication illustrated in FIG. 4.

After completing the selection of the RRUs 108, the modem control module 112 uses the received-power measurement results of the respective terminals for the respective RRUs to estimate the communication quality (for example, channel quality (CQ)) that can be ensured by each of the selected RRUs 108 or a combination thereof (2105). The modem control module 112 assigns the RRUs 108 to each terminal 103 based on the estimated communication quality (2106).

Then, the modem control module 112 transmits information (AAI) including the RRUs 108 selected for each terminal 103 and the MCS found from the estimated communication quality which is obtained by the selected RRUs 108 (or a combination of the selected RRUs 108) to the baseband modem 106 (2107).

The baseband modem 106 can reference the information on the selected RRUs 108 to know the terminal 103 of a transmission source of the uplink signal received by each of the RRUs 108 that are managed by the respective baseband modems 106. Accordingly, it is possible to consolidate signals received from the same terminal 103 by the plurality of RRUs 108 managed by the baseband modem 106. The load on a processing for consolidating the signals received from the terminal 103 can be dispersed between the baseband modem 106 and the modem control module 112.

The baseband modem 106 generates a downlink control signal obtained by including the AAI received from the modem control module 112 into the downlink control signal and up-converting the downlink control signal into the radio frequency band (2108). Then, the generated downlink control signal is broadcast to the terminal 103 (2109).

The terminal 103 receives the broadcast signal, decodes the AAI included in the control signal addressed to the own terminal, generates uplink data signal corresponding to the number of assigned RRUs 108 (antennas) and the MCS (2110), and transmits the generated signal to the baseband modem 106 (2111). It should be noted that the reference signal 2101 for power measurement which is used for selecting the RRUs 108 and transmitted at a separate timing in the flow of FIG. 5 may be transmitted simultaneously with data 2111 addressed to the baseband modem 106.

The baseband modem 106 decodes the received signal (2112), and transmits the response ACK/NAK according to the CRC check result to the terminal 103 (2113). Further, the baseband modem 106 transfers uplink data whose reception has been successful (for which the response ACK has been returned) to the modem control module 112 (2114).

Next, the configuration of the respective nodes of the wireless communication system according to the first embodiment are described.

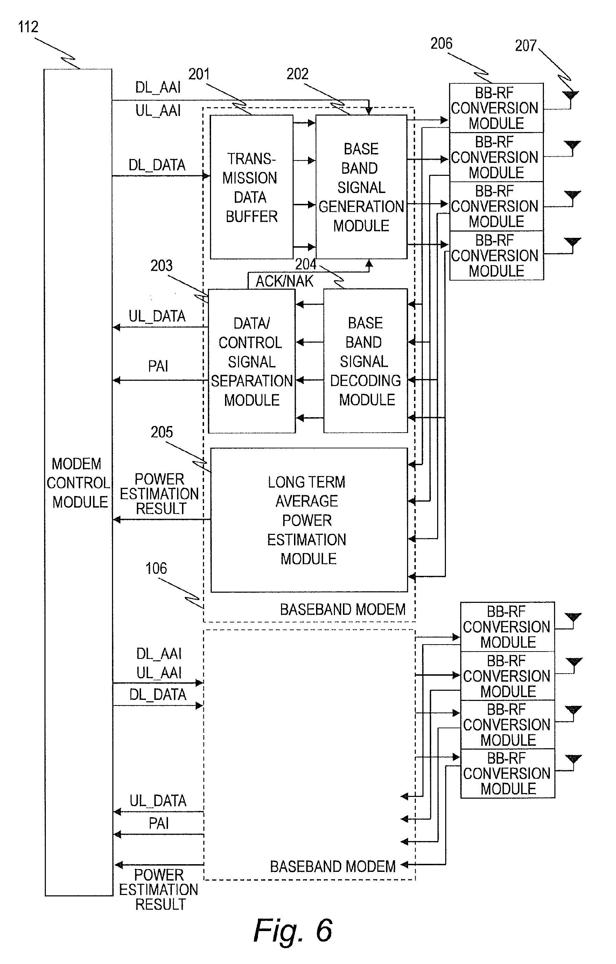

FIG. 6 is a block diagram illustrating the baseband modem 106 and the configuration of the neighboring components according to the first embodiment.

The baseband modem 106 according to the first embodiment includes a transmission data buffer 201, a baseband signal generation module 202, data/control signal separation module 203, a baseband signal decoding module 204, and a long term average power estimation module 205.

The transmission data buffer 201 includes a memory, and temporarily stores a downlink data signal transmitted from the modem control module 112. The baseband signal generation module 202 includes at least one of a logic circuit and a processor, reads the RRU assignment information and the MCS from the AAI transmitted from the modem control module 112, and generates a spatially multiplexed baseband signal addressed to at least one terminal 103. The baseband signal for each antenna is transmitted from the baseband modem 106 to the RRU 108, and converted into an analog signal in the radio frequency band by a BB-RF conversion module 206 of the RRU 108, and the converted signal in the radio frequency band is emitted to the terminal 103 from the antenna 207 of the RRU 108.

As illustrated in FIG. 1, the configuration of the BB-RF conversion module 206 varies according to the coupling (using optical fiber, coaxial cable, or radio link) between the baseband modem 106 and the RRU 108, and hence the baseband modem 106 may be further mounted with a device.

The signal in the radio frequency band transmitted by the terminal 103 is received by the antenna 207 of the RRU 108, and is converted by the BB-RF conversion module 206 from the analog signal in the radio frequency band into a baseband digital signal. However, as described above, the baseband modem 106 performs part of a conversion processing into the baseband digital signal depending on the coupling (using optical fiber, coaxial cable, or radio link) between the baseband modem 106 and the RRU 108.

The baseband modem 106 performs a baseband signal processing on the signal converted from analog into digital. The first object of the baseband processing is to decode the data signal and the control signal that are included in the received signal and extract significant information (for example, PAI). Another object is to estimate the received power of the reference signal for power measurement transmitted from the terminal 103 and select antennas optimum for each terminal.

The baseband signal decoding module 204 includes at least one of a logic circuit and a processor, estimates a channel for the received signal, and performs demodulation and decoding to output a data bit sequence and a control bit sequence.

The data/control signal separation module 203 separates the data signal and the control signal (PAI) transmitted from the terminal 103, and transmits the separated signals to the modem control module 112. Further, the data/control signal separation module 203 inputs the response ACK/NAK indicating the decoding result for the data signal to the baseband signal generation module 202 in order to feed back the decoding result to the terminal 103.

The long term average power estimation module 205 estimates the received power of the reference signal used for power estimation transmitted from the terminal 103. The long term average power estimation module 205 is desirably configured by the logic circuit including a matched filter (MF), but can be processed by a processor. The long term average power estimation module 205 measures the received powers of the reference signals from the respective terminals 103 for each of the RRUs 108, and transmits the measurement results to the modem control module 112.

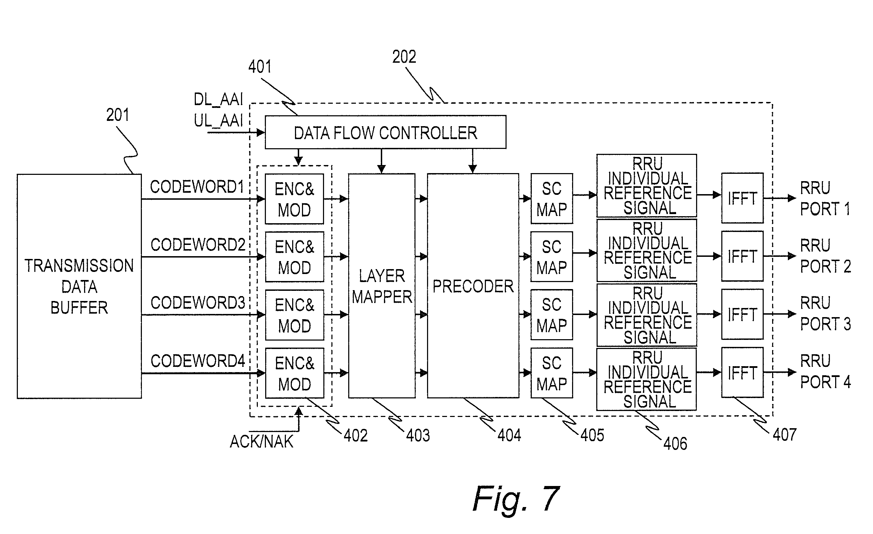

FIG. 7 is a block diagram illustrating the configuration of the baseband signal generation module 202 according to the first embodiment.

The baseband signal generation module 202 according to the first embodiment includes a data flow controller 401, an encoder/modulator 402, a layer mapper 403, a precoder 404, an SCMAP 405, an RRU specific reference signal module 406, and an IFFT module 407.

The data flow controller 401 receives the RRU assignment information (DL_AAI and UL_AAI) from the modem control module 112. The received RRU assignment information is input to the encoder/modulator 402 as control information, and is used as the downlink control signal. Further, the encoder/modulator 402 acquires data addressed to the terminal 103 from the transmission data buffer 201 based on an address that stores the data addressed to the terminal and serves as an address pointer to the transmission data buffer 201 specified by the received DL_AAI and a data length corresponding to the MCS. The encoder/modulator 402 outputs primary modulation symbol sequences corresponding to a plurality of spatial layers.

The layer mapper 403 performs a layer mapping so that primary modulation symbol data output from the encoder/modulator 402 is output to a predetermined RRU 108. After that, the precoder 404 performs precoding as necessary. In a case where the RRUs 108 are sufficiently spaced apart from one another, a precoding matrix may be a unit matrix.

The SCMAP 405 performs a subcarrier mapping. In a single-carrier system, the SCMAP 405 is unnecessary. Further, in a multicarrier system except the OFDMA, the subcarrier mapping is a mapping performed for each carrier. Here, the description of the OFDMA is continued.

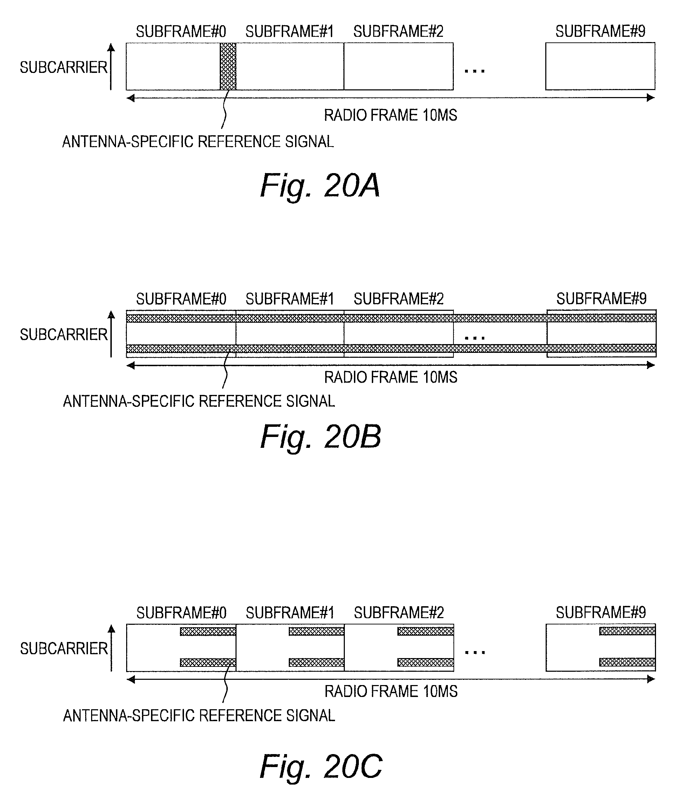

The RRU specific reference signal module 406 inserts an RRU specific reference signal into an appropriate position of the signal subjected to the subcarrier mapping. An example of inserting the RRU specific reference signal is described later with reference to FIG. 20. The function of the RRU specific reference signal module 406 is similar to that of a power estimation reference signal inserting module 208, but is different in that the power estimation reference signal inserting module 208 superposes the reference signal in a time domain while the RRU specific reference signal module 406 superposes the reference signal in a frequency domain.

The IFFT module 407 performs an inverse Fourier transform on the signal into which the reference signal has been inserted. This signal is output from a port of the baseband modem 106 to the RRU 108.

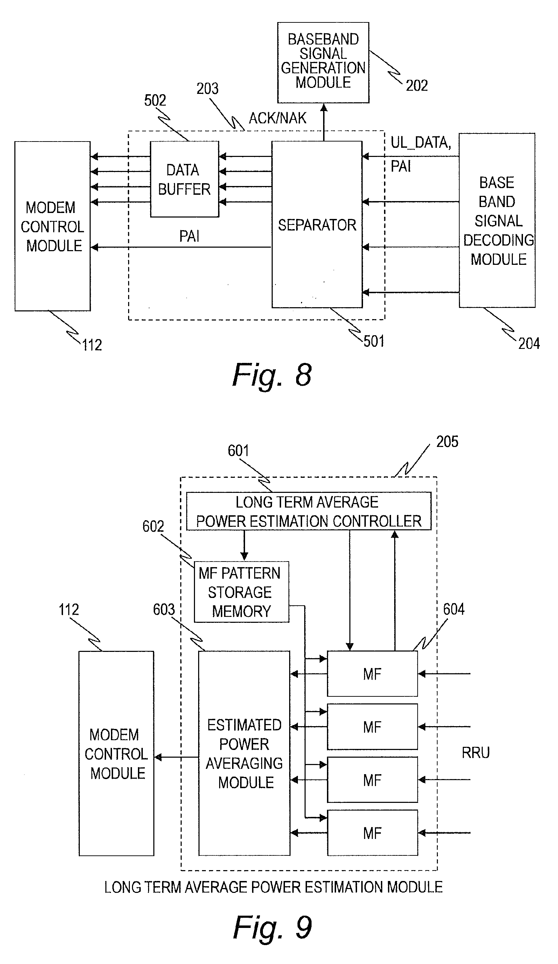

FIG. 8 is a block diagram illustrating the configuration of the data/control signal separation module 203 according to the first embodiment.

The data/control signal separation module 203 according to the first embodiment includes a separator 501 and a data buffer 502.

The separator 501 receives the uplink data signal output from the baseband signal decoding module 204, and stores the received uplink data signal into the data buffer 502. Further, if the reception of the data signal is successful, the separator 501 transfers the data signal to the modem control module 112, and transmits the response ACK regarding the data to the baseband signal generation module 202. Meanwhile, when the reception of the data signal is failed, the separator 501 deletes the data signal from the data buffer 502, and transmits the response NAK regarding the data signal to the baseband signal generation module 202.

Further, the separator 501 receives the PAI fed back from the terminal 103, and transfers the received PAI to the modem control module 112 as it is.

FIG. 9 is a block diagram illustrating the long term average power estimation module 205 according to the first embodiment.

The long term average power estimation module 205 according to the first embodiment includes a long term average power estimation controller, an MF pattern storage memory 602, an estimated power averaging module 603, and a matched filter 604.

The MF pattern storage memory 602 stores a pattern of a reference signal for power estimation (for example, SRS) for each terminal. The long term average power estimation controller 601 sets the pattern of the reference signal for power estimation stored in the MF pattern storage memory 602 in the matched filter 604.

The matched filter 604 estimates the received power of the reference signal by a correlation operation with respect to the received uplink signal. The matched filter 604 sends a completion notification to the long term average power estimation controller 601 each time the estimation is completed.

With the trigger of receiving the completion notification from the matched filter 604, the long term average power estimation controller 601 reads another pattern of the reference signal for power estimation (pattern for another terminal) from the MF pattern storage memory 602, sets the read pattern in the matched filter 604, and issues an instruction to start the operation. It should be noted that the pattern of the reference signal for power estimation changes in terms of time depending on a communication protocol. In this case, contents of the MF pattern storage memory 602 are changed according to the communication protocol.

The estimated power averaging module 603 accumulates outputs from the matched filter 604, and outputs the outputs averaged every fixed period (for example, every second) to the modem control module 112. Then, the accumulation result is initialized to zero when the averaged result is output.

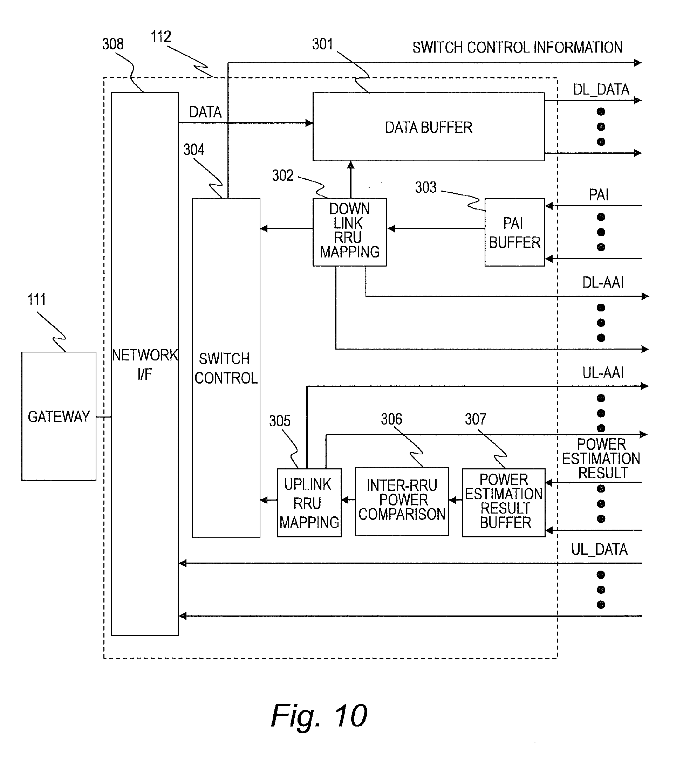

FIG. 10 is a block diagram illustrating the modem control module 112 according to the first embodiment.

The modem control module 112 according to the first embodiment includes a data buffer 301, a downlink RRU mapping module 302, a PAI buffer 303, an uplink RRU mapping module 305, an inter-RRU power comparison module 306, a power estimation result buffer 307, and a network interface 308. It should be noted that the modem control module 112 is coupled to at least one baseband modems 106 on the right side of FIG. 10.

The network interface 308 is coupled to the gateway 111, and performs the uplink and downlink data communication with the gateway 111.

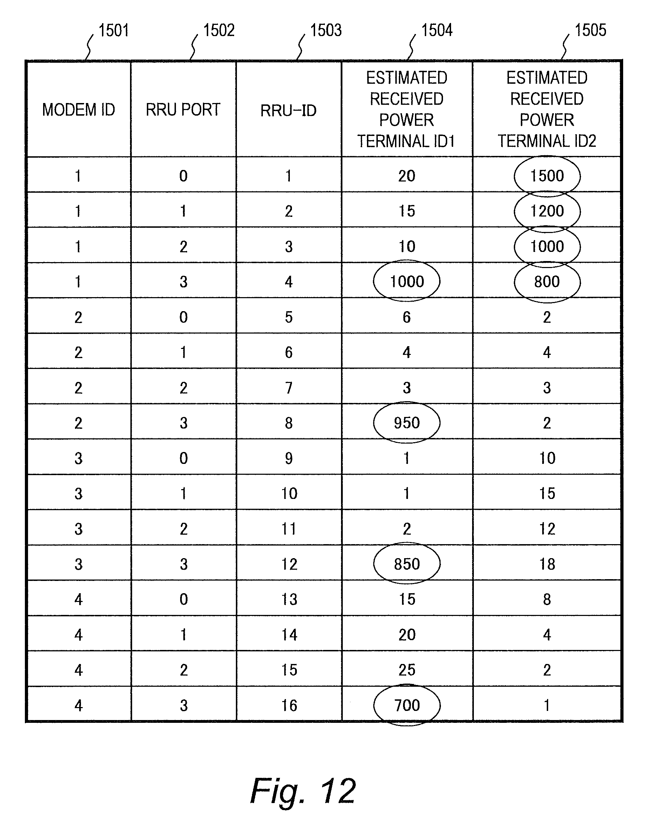

The data on the downlink communication input to the network interface 308 is temporarily stored in the data buffer 301, and is then transferred to the baseband modem 106 according to a mapping result between the terminals and the RRUs decided by the downlink RRU mapping module 302 and route information among terminals-baseband modems-RRUs illustrated in FIG. 12.

The downlink RRU mapping module 302 includes at least one of a logic circuit and a processor, assigns usable RRUs 108 to the respective terminals 103 according to the PAI collected from the terminals 103 via the baseband modem 106, and notifies the respective baseband modems 106 of the RRUs 108 that transmit the data addressed to each of the terminals 103 and the MCS used by each RRU 108.

The PAI buffer 303 is a memory for temporarily storing the PAI collected from the terminal 103 via the baseband modem 106. The data (PAI) stored in the PAI buffer 303 is referenced by the downlink RRU mapping module 302.

Next described is the uplink communication. The user data transmitted from the terminal 103 is transferred to the gateway 111 via the network interface 308. Received-power estimation results of uplink reference signals for power measurement from the respective terminals through the respective RRUs, which are estimated by the respective baseband modems 106, are stored in the power estimation result buffer 307. It should be noted that the power estimation result buffer 307 is a memory for temporarily storing the received-power estimation results of the uplink reference signals for power measurement.

The inter-RRU power comparison module 306 references the received-power estimation results stored in the power estimation result buffer 307 to compare the received-power estimation results from the respective RRUs 108 for each of the terminals 103, and selects at least one RRU 108 in descending order of the received-power measurement results for each of the terminals 103. The uplink RRU mapping module 305 includes at least one of a logic circuit and a processor, and assigns the usable RRUs 108 to the terminals 103 according to results of the power comparison performed by the inter-RRU power comparison module 306. Then, the uplink RRU mapping module 305 notifies the respective baseband modems 106 of the RRUs 108 that receive the data from each of the terminals and the MCS used by each RRU 108.

It should be noted that a switch control module 304 is a component necessary for a second embodiment, and the modem control module 112 according to the first embodiment is not necessarily provided.

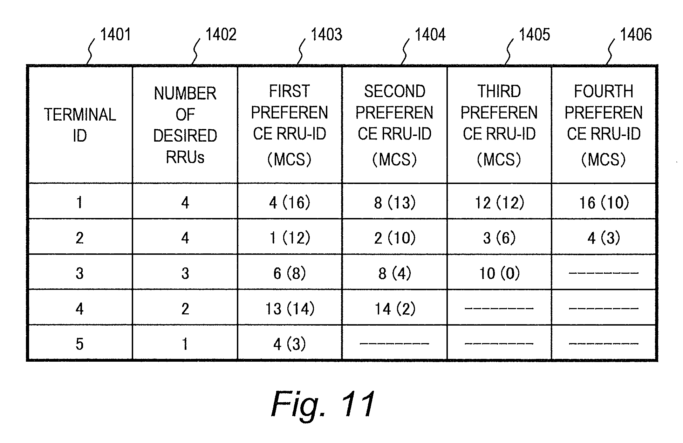

FIG. 11 is an explanatory diagram illustrating contents stored in the PAI buffer 303 according to the first embodiment.

The PAI buffer 303 stores feedback results of the PAI from the terminals 103 as described above. The feedback results of the PAI stored in the PAI buffer 303 includes a terminal identifier 1401, a number 1402 of RRUs desired to be assigned, and identifiers 1403 to 1406 of the RRUs desired to be assigned. The feedback results of the PAI stored in the PAI buffer 303 are referenced by the downlink RRU mapping module 302, and are used for selecting the RRUs 108 that can be used for the communication with respect to the terminal 103.

The terminal identifier 1401 is an identifier for uniquely identifying each of the terminals 103. The number 1402 of the RRUs desired to be assigned is the number of RRUs 108 desired to be assigned to the each of the terminals 103. The identifiers 1403 to 1406 of the RRUs desired to be assigned are identifiers of a plurality (integer number) of RRUs 108 desired to be assigned to the each of the terminals 103. The identifiers 1403 to 1406 of the RRUs desired to be assigned preferably include the MCS by which the RRUs can communicate when assigned.

FIG. 12 is an explanatory diagram illustrating content stored in the power estimation result buffer 307 according to the first embodiment.

The power estimation result buffer 307 temporarily stores, as described above, the received powers of the uplink reference signals for power estimation from the respective terminals through the respective RRUs, which are estimated by the baseband modems 106.

The power estimation result buffer 307 stores an modem identifier 1501, an RRU port identifier 1502, an RRU identifier 1503, and power estimation results 1504 and 1505, and retains for each RRU identifier (RRU-ID) 1503 a relationship between the identifier 1501 of the coupled baseband modem 106 and the identifier 1502 of an RRU port provided to the baseband modem 106.

It should be noted that according to the first embodiment, in which a modem-RRU switch 113 is not provided, it is possible to provide a systematic relationship among RRU-IDs, modem IDs, and RRU ports as illustrated in FIG. 12. However, as in the second embodiment described later, in a case where the modem-RRU switch 113 is provided between the baseband modem 106 and the RRU 108, the relationship among the RRU-IDs, the modem IDs, and the RRU ports changes dynamically.

Further, the power estimation result buffer 307 retains the power estimation results 1504 and 1505 of the reference signals for power estimation from the respective terminals for each of the RRU-IDs.

The inter-RRU power comparison module 306 selects the RRU-IDs from the power estimation result buffer 307 for each of the terminal IDs in descending order of the power estimation results. In the example of FIG. 12, the RRU-IDs for which the powers surrounded by circles are obtained are selected for the respective terminals. The results of selecting the RRUs 108 from the power estimation result buffer 307 can be rewritten to have the contents stored in the PAI buffer 303 by determining the MCS from the estimated received power as illustrated in FIG. 11.

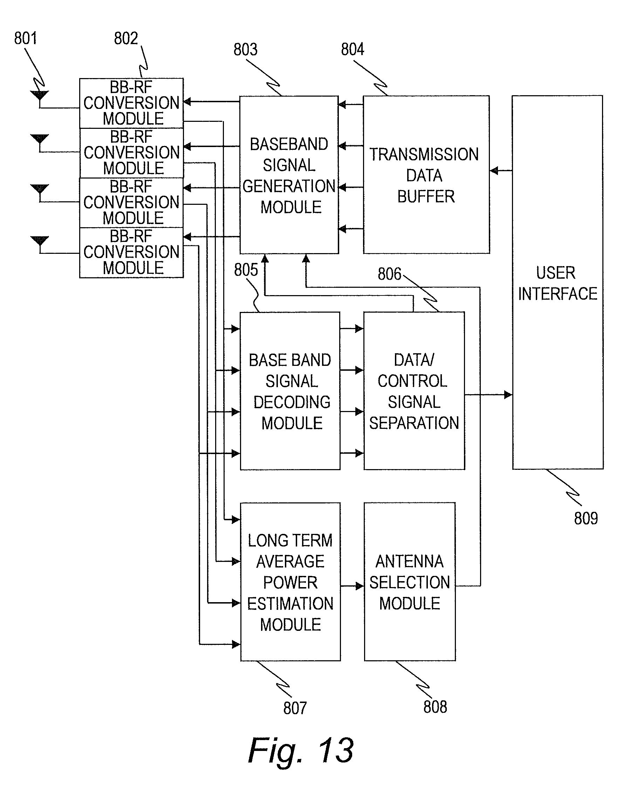

FIG. 13 is a block diagram illustrating the configuration of the terminal 103 according to the first embodiment.

The terminal 103 according to the first embodiment includes an antenna 801, a BB-RF conversion module 802, a baseband signal generation module 803, a transmission data buffer 804, a baseband signal decoding module 805, data/control signal separation 806, a long term average power estimation module 807, an antenna selection module 808, and a user interface 809, and performs conversion between the baseband digital signal and the analog signal of a radio frequency.

The BB-RF conversion module 802 includes an AD converter, a DA converter, an up converter, a down converter, a power amplifier, a low noise amplifier, and a duplexer. The AD converter converts an analog signal into a digital signal. The DA converter converts a digital signal into an analog signal. The up converter converts a baseband signal into a radio frequency signal. The down converter converts a radio frequency signal into a baseband signal. The power amplifier amplifies a transmission signal. The low noise amplifier amplifies a received signal. The duplexer separates a downlink signal and an uplink signal from each other.

The baseband signal generation module 803 converts the data signal and the control signal (such as PAI) stored in the transmission data buffer 804 into the baseband signal according to the protocol. The baseband signal decoding module 805 extracts the data signal and the control signal from the received signal (baseband signal) according to the protocol.

The data/control signal separation 806 transfers the data signal extracted by the baseband signal decoding module 805 to the user interface 809. Further, the data/control signal separation 806 inputs control information (for example, the response ACK/NAK to the received signal (data signal)) for the physical layer and the MAC layer to the baseband signal generation module.

The long term average power estimation module 807 has the same function and configuration as those of the long term average power estimation module 205 of the base station. Specifically, the long term average power estimation module 807 measures the received power of the reference signal specific to each of the RRUs 108, and transmits the measurement results to the antenna selection module 808.

The antenna selection module 808 compares the received powers of the reference signals for power measurement from the respective RRUs 108 which are estimated by the long term average power estimation module 807, selects the at least one RRU 108 based on the comparison results, estimates the communication quality obtained by the selected RRUs 108 (or a combination of the selected RRUs 108), generates information indicating the estimated communication quality (for example, channel quality indicator (CQI)), and inputs the generated CQI to the baseband signal generation module 803 in order to uplink the generated CQI along with RRU selection information as the PAI.

The user interface 809 reproduces images, sound, and data based on the received data. Further, the user interface 809 receives a key input and an audio input made by a user, and offers images, sound, and data communication according to application commands.

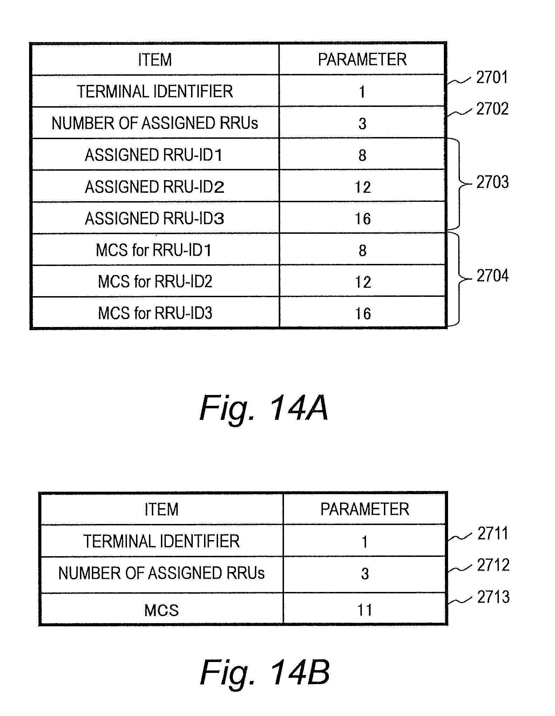

FIG. 14A is an explanatory diagram illustrating the RRU assignment information notified from the base station to the terminal 103 according to the first embodiment.

The RRU assignment information (AAI) according to the first embodiment includes a terminal ID 2701, a number 2702 of assigned RRUs, an assigned RRU-ID 2703, and an MCS 2704 for the RRU.

The terminal ID 2701 is an identifier of the terminal 103 to be notified of the RRU assignment information. The number 2702 of assigned RRUs is the number of RRUs 108 assigned to the above-mentioned terminal. The assigned RRU-ID 2703 is an identifier of the assigned RRUs 108. The MCS 2704 for the RRU is the MCS used for each of the RRUs 108.

In the downlink communication, the identifier of the RRU 108 is found from the above-mentioned information to thereby clarify the pattern of the reference signal, which allows channel estimation. Further, the MCS is found to thereby clarify a modulation scheme and an encoding rate of each of spatial streams which have been subjected to a spatial filter processing, which allows the demodulation and the decoding. The data communication can be thus performed.

Meanwhile, in the uplink communication, the number of streams to be received by the base station is found by the found identifiers of the RRUs 108, but the antennas and the MCS by which the terminal 103 is to transmit the data are unknown. Therefore, as illustrated in FIG. 14B, the RRU assignment information on the uplink communication may include a terminal ID 2711, a number 2712 of assigned RRUs, and an MCS 2713. The number 2712 of assigned RRUs is the number of streams to be transmitted by the terminal 103. The MCS 2713 is an average MCS among the streams. In the uplink communication, with the above-mentioned information, the terminal 103 can uniquely decide a transmission method, and the base station can learn a reception method for the stream transmitted from the terminal 103 from the notified transmission method of the terminal 103, which allows the data communication.

Next described is operations of the respective devices according to the first embodiment.

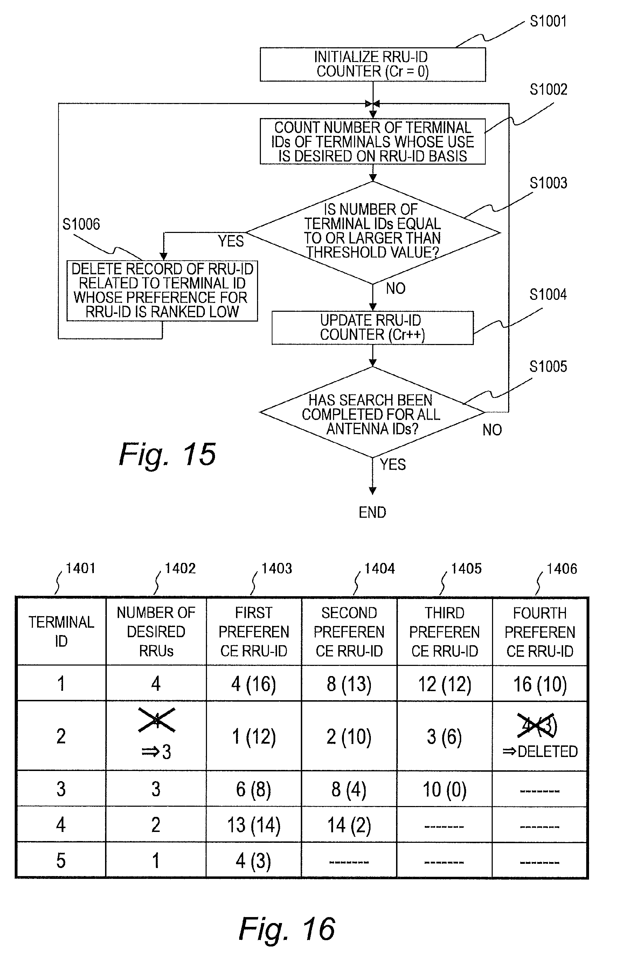

FIG. 15 is a flowchart illustrating a processing common to the downlink RRU mapping module 302 and the uplink RRU mapping module 305 according to the first embodiment.

First, in order to determine whether or not the number of terminals 103 assigned to all the RRUs 108 exceeds an upper limit, a counter for the RRU 108 is initialized (S1001).

Subsequently, the number of terminals 103 that desire the RRU 108 indicated by the counter is counted according to the feedback results of the PAI illustrated in FIG. 11 stored in the PAI buffer 303 (S1002).

The number of terminals counted in Step S1002 is compared with a predetermined threshold value (S1003). The threshold value is decided depending on a management policy of the system, and can be set to, for example, 20.

If it is determined as a result of the comparison in Step S1003 that the counted number of terminals 103 is larger, the preference rank of the above-mentioned RRU 108 is compared among the terminals 103 that desire the RRU 108, information indicating that the use of the above-mentioned RRU 108 is desired is deleted from the terminals in ascending order of the preference rank of the above-mentioned RRU 108 (S1006). After that, the number of terminals 103 is counted again (S1002), and the number of terminals is compared with the predetermined threshold value (S1003).

Meanwhile, if it is determined as a result of the comparison in Step S1003 that the counted number of terminals 103 is smaller than the predetermined threshold value, the counter for the RRU is updated in order to determine the number of terminals 103 for the next RRU 108 (S1004).

After that, it is determined whether or not the determination related to all the RRUs 108 has been completed (S1005). If it is determined as a result of the determination that the determination related to all the RRUs 108 has not been completed, the procedure returns to Step S1002 to perform the processing for the next RRU 108. On the other hand, if the determination related to all the RRUs 108 has been completed, the processing is completed.

FIG. 16 is an explanatory diagram of the RRU assignment results according to the first embodiment of this invention. In particular, FIG. 16 illustrates a state in which the feedback results of the PAI illustrated in FIG. 11 stored in the PAI buffer 303 change according to an RRU mapping processing illustrated in FIG. 15. It should be noted that in FIG. 16, the threshold value of the number of terminals 103 in Step S1003 of FIG. 15 is set to 2.

The RRU 108 whose identifier is 4 is desired by three terminals (terminal ID=1, 2, 5). For this reason, among the terminals whose number is determined in Step S1003 as exceeding the threshold value of 2 and which desire the RRU 108 whose identifier is 4, information on the RRU 108 whose identifier is 4 corresponding to the terminal (ID=2) whose preference for the RRU (ID=4) is ranked low is deleted.

As described above, in the RRU mapping processing illustrated in FIG. 15, the upper limit is set for the number of terminals 103 assigned to each of the RRUs 108 so as not to impose a load on a specific RRU 108, and the desire of the terminal whose preference is ranked low is denied if the upper limit is exceeded, which can provide a minimum throughput even to the terminal desiring only the above-mentioned RRU 108.

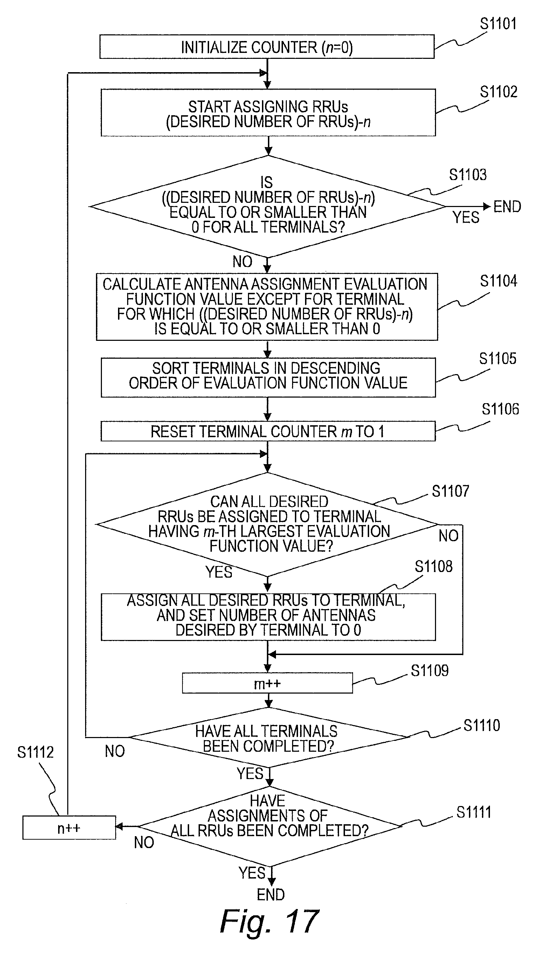

FIG. 17 is a flowchart illustrating a modified example of the processing common to the downlink RRU mapping module 302 and the uplink RRU mapping module 305 according to the first embodiment.

The RRU mapping processing illustrated in FIG. 15 is controlled with a relatively long cycle based on a concept close to admission control. Meanwhile, in the modified example illustrated in FIG. 17, the processing is controlled with a short cycle based on a concept close to a scheduler in consideration of a wireless channel state such as proportional fairness, thereby enhancing frequency usage efficiency.

A characteristic of the processing according to the modified example illustrated in FIG. 17 is to assign the appropriate RRUs 108 to each terminal based on the RRUs 108 selected by each terminal 103 and the MCS used by each of the RRUs 108. Specifically, a basic concept of the processing according to the modified example illustrated in FIG. 17 is to attempt to assign the RRUs 108 whose number is ((the number of RRUs desired by the terminal 103)-*n*) (*n*=0, 1, 2, ...) and to repeat the assignment until the assignment is completed for all the RRUs 108 or until (the number of the RRUs 108 desired by all the terminals 103)-*n*) becomes 0 or less.

First, the counter n is initialized to 0 (S1101), and the assignment of the RRUs 108 whose number is ((the number of RRUs desired by the terminal 103)-*n*) is started (S1102).

Then, it is determined whether or not ((the number of RRUs desired by all the terminals 103)-*n*) is 0 or less (S1103). If it is determined as a result of the determination that ((the number of RRUs desired by all the terminals 103)-*n*) is 0 or less, the RRU 108 is unable to be assigned to any one of the terminals 103, and hence the above-mentioned processing is ended.

On the other hand, if ((the number of RRUs desired by some terminals 103)-*n*) is not 0 or less, at least one RRU 108 is able to be assigned, an evaluation function value of the proportional fairness is calculated regarding all the terminals 103 other than the terminal for which ((the desired number of RRUs)-*n*) is 0 or less (S1104). In the proportional fairness, an average transmission rate and an instantaneous transmission rate for each terminal 103 are necessary. For the average transmission rate, the number of bits that have succeeded in the communication with respect to the terminal 103 may be time-averaged to be managed. For the instantaneous transmission rate, a data communication volume expected in a case where all the desired RRUs 108 except n RRUs 108 whose preference is ranked low are assigned may be calculated based on the MCS illustrated in FIG. 11.

Then, the terminals 103 are sorted in descending order of the evaluation function value of the proportional fairness, and indices indicating ranks of the evaluation function value are assigned thereto (S1105). Subsequently, the counter *m* for counting the rank of the evaluation function value is initialized (S1106), and it is determined whether or not the assignment can be performed in actuality (S1107).

Specifically, if all ((the desired number of RRUs)-*n*) RRUs 108 desired by the terminal 103 whose evaluation function value is ranked in the m-th position can be assigned, all the RRUs 108 are assigned to the above-mentioned terminal 103 (S1108). If the determination of the assignment to the terminal 103 ranked in the m-th position is completed, the counter *m* is updated for the determination regarding the terminal 103 ranked next (S1109).

After the counter *m* is updated, it is determined whether or not the determination regarding all the terminals 103 has been finished (S1110). If the determination regarding some terminals 103 has not been finished, the procedure returns to Step S1107 to determine the assignment to the next terminal 103. On the other hand, if the determination regarding all the terminals 103 has been finished, the procedure advances to Step S1111 to determine whether or not the assignment of the RRUs has been completed.

If it is determined as a result of the determination that all the RRUs 108 are assigned to any one of the terminals 103, the assignment of the RRUs 108 has been completed, and hence the above-mentioned processing is ended. On the other hand, if the assignment of some of the RRUs 108 has not been completed, the counter n is updated, the RRUs 108 to be assigned to each of the terminals 103 are decreased in number by one (n is incremented by one), and the above-mentioned processing is executed again from Step S1102.

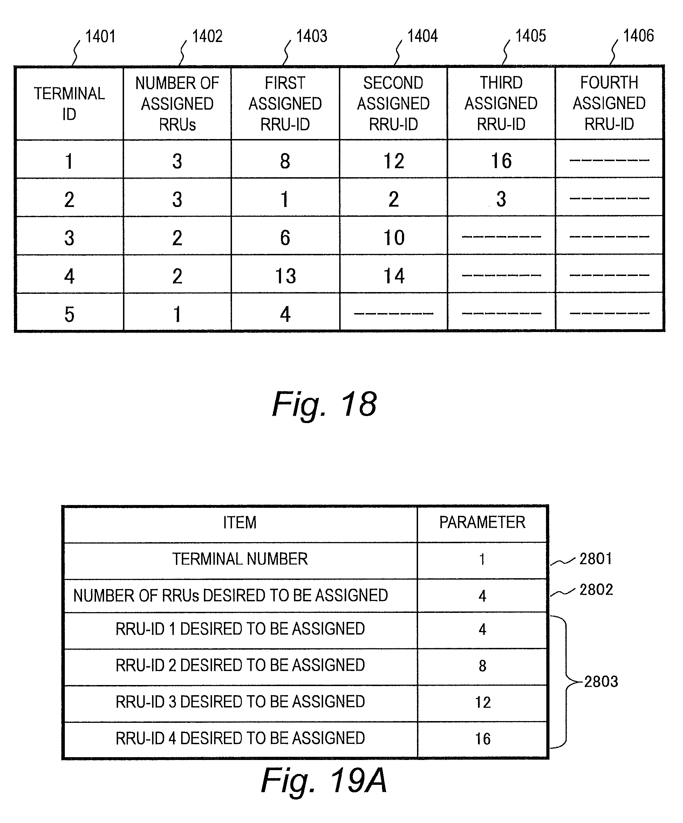

FIG. 18 is an explanatory diagram of the RRU assignment results of the RRU mapping processing illustrated in FIG. 17 according to the first embodiment of this invention.

The RRU assignment results illustrated in FIG. 11 show the identifier of the RRU 108 desired by each of the terminals 103, but the RRU assignment results illustrated in FIG. 18 show results of the assignment of the RRUs 108, and hence the characteristic is that one terminal 103 corresponds to each of the RRUs 108. The baseband modem 106 and the terminal 103 are notified of the above-mentioned assignment results as the RRU assignment information (DL_AAI and UL_AAI). It should be noted that in a multicarrier communication system such as an OFDMA, the assignment results illustrated in FIG. 18 may be generated for each of subcarriers or each of frequency segments in which a plurality of subcarriers are bound.

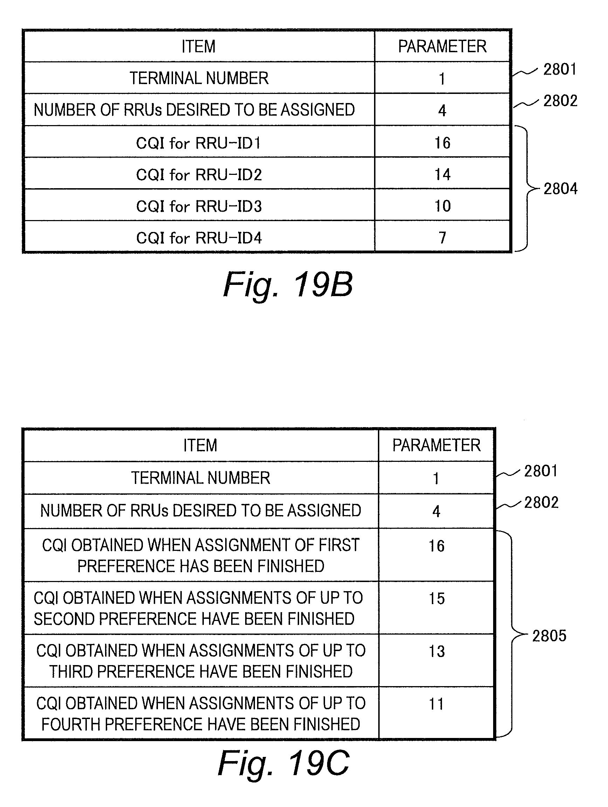

FIGS. 19A, 19B, and 19C are explanatory diagrams illustrating the contents of PAI feedback from the terminal 103 according to the first embodiment.

The PAI feedback information illustrated in FIG. 19A includes an identifier 2801 of a transmission source terminal, a number 2802 of RRUs desired to be assigned to the above-mentioned terminal, and identifiers 2803 of the RRUs desired to be assigned. The above-mentioned information enables the modem control module 112 to perform the control illustrated in FIG. 15.

FIGS. 19B and 19C illustrate information added to the PAI feedback information illustrated in FIG. 19A.

FIG. 19B shows an example of a case of a multi code word (MCW) that uses code words that differ according to the RRU 108. In the case of the MCW, CQIs (2804) may be fed back for each of the RRU-IDs.

FIG. 19C shows an example of a case of a single code word (SCW) that uses one code word among the plurality of RRUs 108. In the case of the SCW, the average communication quality among the spatial streams changes according to the combination of assigned RRUs, and hence the average communication quality according to the number of assigned RRUs may be fed back as CQIs (2805).

Further, in order to strictly control the communication quality, it is possible to expand additional information illustrated in FIG. 19C and feed back the CQI optimum for all the combinations of the assigned RRU 108. However, as the number of RRUs 108 increases, the number of combinations of the RRU 108 increases, and hence feedback information puts pressure on an uplink bandwidth. In such a case, the information illustrated in FIG. 19B may be fed back to the modem control module 112, in which the CQIs are averaged according to the combination of the assigned RRUs 108.

FIGS. 20A to 20C are explanatory diagrams illustrating layout examples of the RRU specific reference signal transmitted in the downlink communication according to the first embodiment.

In the example of FIG. 20A, the RRU specific reference signal is laid out continuously in a subcarrier direction. Meanwhile, in the example of FIG. 20B, the RRU specific reference signal is laid out continuously in a time direction.

Among the RRUs 108, a Zadoff-Chu sequence, a PN sequence, or the like may be used so that the RRU specific reference signals have a low correlation with one another. However, if a channel fluctuation occurs in a correlation interval, the orthogonality is lost among sequences, and hence it is desired that the reference signal be laid out continuously in a direction that exhibits a smaller channel fluctuation. For example, the continuous layout in the subcarrier direction is desired if delay spread of the propagation path is small, while the continuous layout in the time direction is desired if moving speed of the terminal is low. In general, a mobile communication system is optimized for terminals moving at low speed which are most likely to exist, and hence it is desired that the RRU specific reference signal be laid out continuously in the time direction. However, because the terminal 103 can continually measures the reference signal, the RRU specific reference signal may be laid out in a discrete manner as illustrated in FIG. 20C in consideration of efficiency of the data communication.

The first embodiment has been described above by taking the example of the MIMO, but this invention is not limited to the MIMO and can be applied to the wireless communication system in which the terminal 103 communicates with a plurality of base stations (antennas) such as site diversity in which a plurality of base stations (antennas) transmit the same signal.

As described above, according to the first embodiment of this invention, a plurality of antennas (RRUs 108) can be assigned to the terminal in the vicinity of a cell boundary across the cells, and the communication quality of the terminal in the vicinity of the cell boundary can be improved by reducing inter-cell interference.

Specifically, in the first embodiment, as illustrated in FIG. 2, the RRUs 108-2, 108-4, 108-5, and 108-7 having a short propagation distance can be assigned to the terminal 103-3 across the cells. In this case, the selected RRUs and the terminal 103 communicate with each other by signals 109-1, 109-2, 109-3, and 109-4. The other RRUs 108-1, 108-3, 108-6, and 108-8 communicate with other terminals 103-1 and 103-6, respectively. Therefore, the interference signals 109-5, 109-6, 109-7, and 109-8 reach the terminal 103-3 from the above-mentioned RRUs.

However, the propagation distances of the interference signals 109-5, 109-6, 109-7, and 109-8 are longer than the propagation distances of desired signals 109-1, 109-2, 109-3, and 109-4, and hence the attenuation of the interference signals becomes larger than the attenuation of the desired signals. Accordingly, an electric field intensity of the interference signal is lowered, the communication quality of the terminal 103-3 further improves than in a conventional case illustrated in FIG. 31, and degradation of the communication quality due to the interference signal rarely becomes a problem.

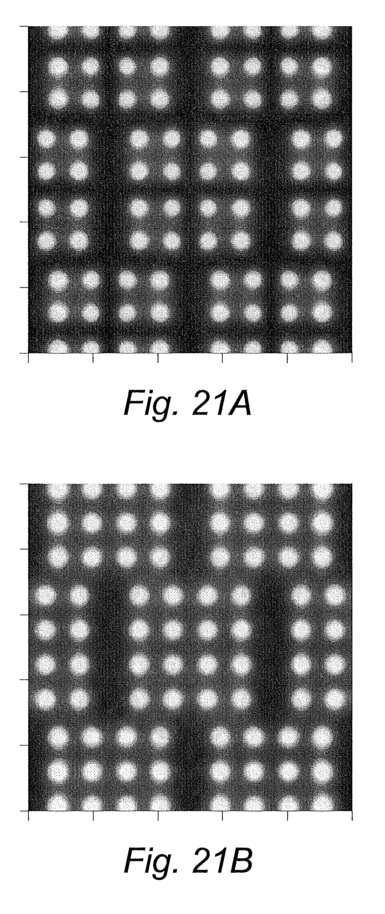

FIGS. 21A and 21B are explanatory diagrams showing effects of the first embodiment of this invention.

FIG. 21A shows the frequency usage efficiency exhibited in a case where the antennas cannot be selected across the cells by each terminal as in the conventional case. FIG. 21B shows the frequency usage efficiency exhibited in a case where the antennas can be selected across the cells by each terminal according to the first embodiment. It should be noted that in each of FIGS. 21A and 21B, white portions indicate the frequency usage efficiency being high, and black portions indicate the frequency usage efficiency being low.

In FIGS. 21A and 21B, four compact base stations (four antennas) are arranged in a cell, and each of the compact base stations is provided with four antennas. In FIGS. 21A and 21B, the antennas are located in portions indicated by white circles.

In the conventional case, as illustrated in FIG. 21A, the terminal selects a base station to perform 4x4 MIMO communication with the selected base station. In this case, such inter-cell interference as illustrated in FIG. 31 becomes a problem in a boundary among areas of the respective compact base stations, which lowers the frequency usage efficiency.

Meanwhile, according to the first embodiment shown in FIG. 21B, the terminal selects four antennas in a close range of the terminal across the cells, and performs the 4×4 MIMO communication with the selected four antennas. Therefore, according to the first embodiment, interference power can be lowered in the manner as illustrated in FIG. 2, and the frequency usage efficiency can be enhanced even in the area in which the frequency usage efficiency is low in the conventional case shown in FIG. 21A.

### (Second embodiment)

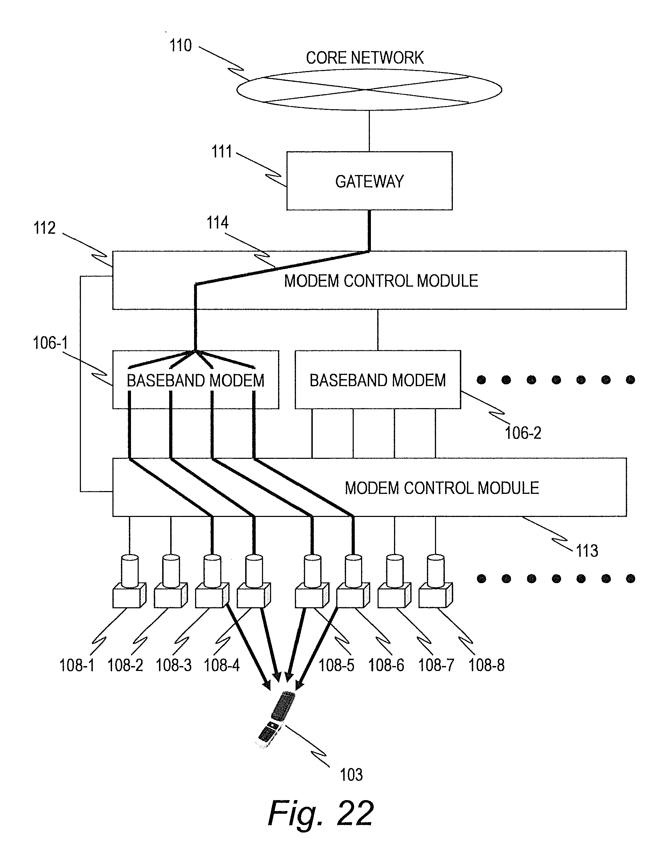

FIG. 22 is a diagram illustrating a network configuration of a wireless communication system according to a second embodiment of this invention.

The wireless communication system according to the second embodiment is different from the wireless communication system according to the first embodiment in which the baseband modems 106 and the RRUs 108 are coupled to each other based on a predetermined correspondence relationship in that the modem-RRU switch 113 is provided between the baseband modems 106 and the RRUs 108. It should be noted that, with regard to the second embodiment, only points thereof different from the above-mentioned first embodiment are described, and descriptions of the same configurations and the same processings as those of the above-mentioned first embodiment are omitted.

The modem-RRU switch 113 changes over a switch according to an instruction from the modem control module 112, and changes over a coupling between at least one antenna port of the baseband modem 106 and the RRU 108. The wireless communication system according to the second embodiment can consolidate the baseband modems 106 used for communication with one terminal 103 into one, and is advantageous in that the cooperative baseband signal processing among the baseband modems 106 is unnecessary.

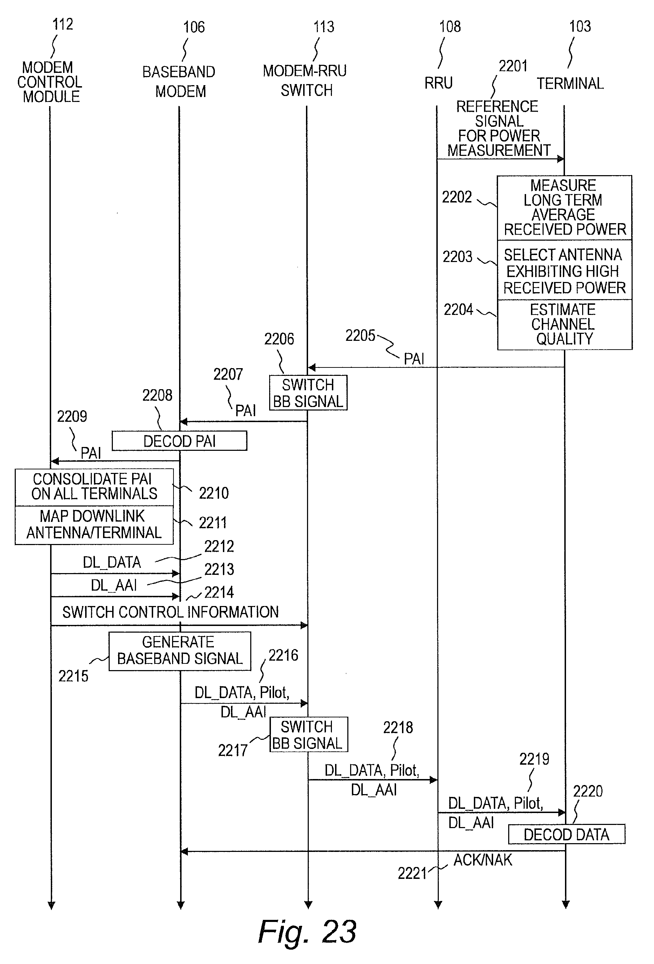

FIG. 23 is a sequence diagram illustrating the operations of the respective nodes performed at a time of the downlink communication in the wireless communication system according to the second embodiment.

The RRU 108 superposes the reference signal for power measurement on a downlink baseband signal transmitted from the baseband modem 106, the signal on which the reference signal for power measurement is superposed is up-converted into the radio frequency band, and the up-converted signal is broadcast to the terminals 103 (2201). Specifically, a reference signal pattern is retained in the memory of the RRU 108. The RRU 108 reads the reference signal pattern from the memory at an appropriate timing, and the reference signal pattern is added to the baseband signal transmitted from the baseband modem 106.

The terminal 103 uses the reference signals for power measurement received from the plurality of RRUs 108 to measure received powers of the reference signals for power measurement for each of the RRUs 108 (2202). In estimating the received power, the terminal 103 measures an average received power over a long term for each of the RRUs 108 in order to prevent a propagation path from being erroneously selected due to short-interval fluctuations (fading). In other words, it is desired that a time (long term) for averaging the received power be set approximately 10 times as large as the inverse of a Doppler frequency due to the fading.

After completing the measurement of the received powers, the terminal 103 compares received-power measurement results among the RRUs 108, and selects *N* RRUs 108 in descending order of the received-power measurement results (2203). The number *N* of selected RRUs 108 is an integer which is not negative, and may be determined in the same manner as in the first embodiment illustrated in FIG. 4.

The terminal 103 uses the reference signal for power measurement to estimate communication quality (for example, channel quality (CQ)) that can be ensured by each of the selected RRUs 108 (or a combination of the selected RRUs 108) (2204).

The terminal 103 transmits the selected RRUs 108 and information (for example, channel quality indicators (CQIs)) indicating estimated communication quality which is obtained by the selected RRUs 108 (or a combination of the selected RRUs 108) to the baseband modem 106 on a base station side as an uplink control signal (preferred antenna information (PAI)) (2205).

The RRU 108 down-converts the received uplink control signal, and sends the converted baseband signal to the modem-RRU switch 113. The modem-RRU switch 113 switches over a path of the baseband signal (PAI) (2206), and sends the baseband signal (PAI) to the baseband modem 106 (2207).

The baseband modem 106 decodes the PAI transmitted from the terminal 103 (2208), and transmits a decoding result to the modem control module 112 (2209).

The modem control module 112 consolidates the PAI on at least one terminal 103 transmitted from at least one baseband modem 106 (2210), assigns the RRUs to each terminal 103 based on the consolidated PAI (2211), and instructs at least one baseband modems 106 to perform data communication according to RRU assignment results (2212).

Then, the modem control module 112 transmits RRU assignment information (antenna assign information (AAI)) indicating the RRU assignment results with respect to the terminal and a modulation and coding scheme (MCS) used by each of the RRUs assigned to each terminal (2213). In addition, the modem control module 112 transmits switch control information for controlling the modem-RRU switch 113 to the modem-RRU switch 113 based on a positional relationship between the baseband modem 106 that has transmitted the data signal addressed to the terminal and the RRU 108 (2214).

The baseband modem 106 generates a baseband signal based on the data 2212 and the AAI 2213, which are addressed to each terminal and transmitted from the modem control module 112, by inserting a control signal or a reference signal as necessary (2215). The baseband modem 106 then transmits the generated baseband signal to each of the RRUs 108 via the modem-RRU switch 113 (2216, 2217, and 2218).

The RRU 108 up-converts the generated baseband signal into a radio frequency band, and broadcasts the up-converted signal to the terminals 103 (2219). It should be noted that the reference signal for power measurement that is used to select the RRU 108 may be transmitted simultaneously with the data and AAI addressed to each terminal.

The terminal 103 receives the broadcast signal, decodes the data included in the signal addressed to the own terminal (2220), and transmits a response ACK or NAK according to a CRC check result to the baseband modem 106 (2221).

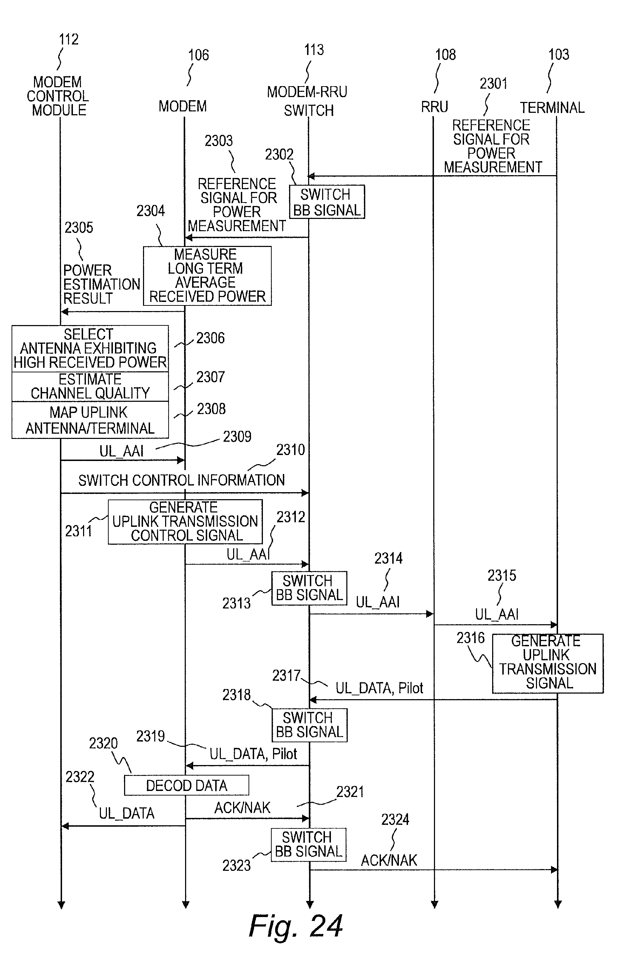

FIG. 24 is a sequence diagram illustrating the operations of the respective nodes performed at a time of the downlink communication in the wireless communication system according to the second embodiment.

The baseband modem 106 receives a reference signal (sounding reference signal (SRS)) repeatedly transmitted from the terminal 103 via the RRU 108 (2301) regardless of the presence/absence of data transmitted from the terminal 103 (2303) after the path is controlled by the modem-RRU switch 113, and uses the received reference signal as the reference signal for power measurement to measure a long term average SRS received power of each terminal 103 for each RRU 108 (2304). In the same manner as the operation at the time of the above-mentioned downlink communication illustrated in FIG. 23, a period for averaging the received powers may be set based on the Doppler frequency due to the fading. The baseband modem 106 transmits the received-power measurement results to the modem control module 112 (2305).

The modem control module 112 compares the received-power measurement results among the RRUs 108 for each terminal 103, and selects *N* RRUs 108 in descending order of the measurement results (2306). The number *N* of the selected RRUs 108 is an arbitrary integer which is not negative, and may be determined in the same manner as the operation at the time of the downlink communication illustrated in FIG. 4.

After completing the selection of the RRUs 108, the modem control module 112 uses the received-power measurement results of the respective terminals for the respective RRUs to estimate the communication quality (for example, channel quality (CQ)) that can be ensured by each of the selected RRUs 108 or a combination thereof (2307). The modem control module 112 assigns the RRUs 108 to each terminal 103 based on the estimated communication quality (2308).

Then, the modem control module 112 transmits information (AAI) including the RRUs 108 selected by each terminal 103 and the MCS found from the estimated communication quality which is obtained by the selected RRUs 108 (or a combination of the selected RRUs 108) to the baseband modem 106 (2309). In addition, the modem control module 112 transmits the switch control information for controlling the modem-RRU switch 113 to the modem-RRU switch 113 based on the positional relationship between the baseband modem 106 that has transmitted the data signal addressed to the terminal and the RRU 108 (2310).

The baseband modem 106 includes the AAI received from the modem control module 112 into the downlink control signal, up-converts the downlink control signal into the radio frequency band, and generates the downlink control signal from the up-converted signal (2311). Then, the generated downlink control signal is broadcast to the terminal 103 (2312).

The baseband modem 106 transmits the AAI received from the modem control module 112 to the RRU 108 via the modem-RRU switch 113 along with the downlink control signal (2313 and 2314).

The RRU 108 up-converts the received downlink control signal into the radio frequency band, and broadcasts the up-converted signal to the terminal 103 (2315).

The terminal 103 receives the broadcast signal, decodes the AAI included in the control signal addressed to the own terminal, generates uplink data signal corresponding to the number of assigned RRUs 108 (antennas) and the MCS (2316), and transmit the generated signal to the baseband modem 106 via the modem-RRU switch 113 (2217, 2318, and 2319). It should be noted that the reference signal 2301 for power measurement which is used for selecting the RRUs 108 and transmitted at a separate timing in the flow of FIG. 24 may be transmitted simultaneously with data 2317 addressed to the baseband modem 106.

The baseband modem 106 decodes the received signal (2320), and transmits the response ACK/NAK according to the CRC check result to the terminal 103 (2321, 2323, and 2324). Further, the baseband modem 106 transfers uplink data whose reception has been successful (for which the response ACK has been returned) to the modem control module 112 (2322).

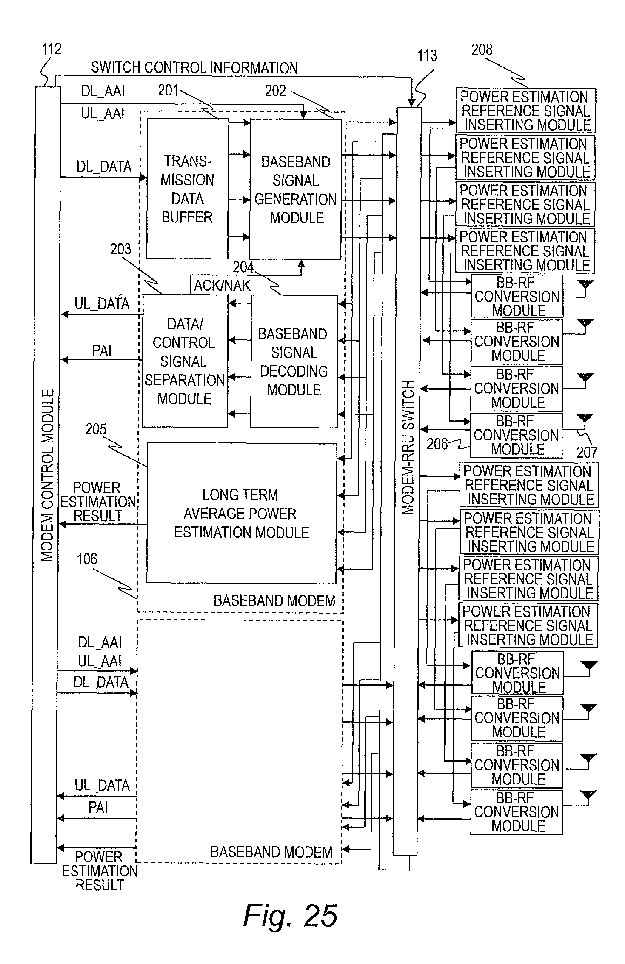

FIG. 25 is a block diagram illustrating the baseband modem 106 and the configuration of the neighboring components according to the second embodiment.

The second embodiment is different from the above-mentioned first embodiment in that the modem-RRU switch 113 is provided between the baseband modem 106 and the RRU 108 and that the power estimation reference signal inserting module 208 is added on a downlink transmission side of the RRU 108.

The baseband modem 106 according to the second embodiment includes the transmission data buffer 201, the baseband signal generation module 202, the data/control signal separation module 203, the baseband signal decoding module 204, and the long term average power estimation module 205. The respective components provided to the baseband modem 106 are the same as those of the above-mentioned first embodiment.

The modem-RRU switch 113 includes a logic circuit and an electrical switch (or optical switch). The logic circuit changes over a coupling between an input port and an output port of the switch. By the logic circuit, the changeover, distribution, and combining among the ports of the switch can be realized with ease, which enables the switch to be controlled flexibly. The changeover of the coupling of the switch is controlled by the modem control module 112.

The RRU 108 according to the second embodiment includes the power estimation reference signal inserting module 208, the BB-RF conversion module 206, and the antenna 207. The BB-RF conversion module 206 and the antenna 207 are the same as those of the above-mentioned first embodiment.

The power estimation reference signal inserting module 208 includes a logic circuit and a memory, and the memory stores the reference signal. The power estimation reference signal inserting module 208 superposes the reference signal pattern stored in the memory on the baseband signal input from the baseband modem 106 via the modem-RRU switch 113. In order to know a timing for the RRU 108 to superpose the reference signal, the baseband modem 106 may superpose control information (for example, enabler) for notifying of a timing to insert the reference signal on the baseband signal.

It should be noted that the modem-RRU switch 113 is formed of different switches so as to control the uplink signal and the downlink signal separately. The switch for the uplink signal changes over the switch according to the switch control information decided by the modem control module 112 based on the results of the power measurement from the long term average power estimation module 205. The switch for the downlink signal changes over the switch according to the switch control information decided by the modem control module 112 based on the PAI fed back by the terminal.

It should be noted that this invention is not limited to the above-mentioned control method, and the switch for the uplink signal and the switch for the downlink signal may be changed over in the same manner according to the same switch control information. In this case, the modem control module 112 may change over the switch according to at least one of the switch control information based on the results of the power measurement of the long term average power estimation module 205 and the switch control information based on the PAI fed back by the terminal.

FIG. 10 is referenced to describe the configuration of the modem control module 112 according to the second embodiment.

The modem control module 112 according to the second embodiment includes the data buffer 301, the downlink RRU mapping module 302, the PAI buffer 303, the switch control module 304, the uplink RRU mapping module 305, the inter-RRU power comparison module 306, the power estimation result buffer 307, and the network interface 308.

The switch control module 304 receives the DL_AAI output from the downlink RRU mapping module 302 and the UL_AAI output from the uplink RRU mapping module 305, and manages the route information among baseband modems-RRUs-terminals. In other words, the switch control module 304 controls the modem-RRU switch 113 so that the baseband modem 106 in charge of a signal processing of the terminal 103 and the RRU 108 are coupled according to the DL_AAI and the UL-AAI.

It should be noted that the components other than the switch control module 304 are the same as those of the above-mentioned first embodiment.

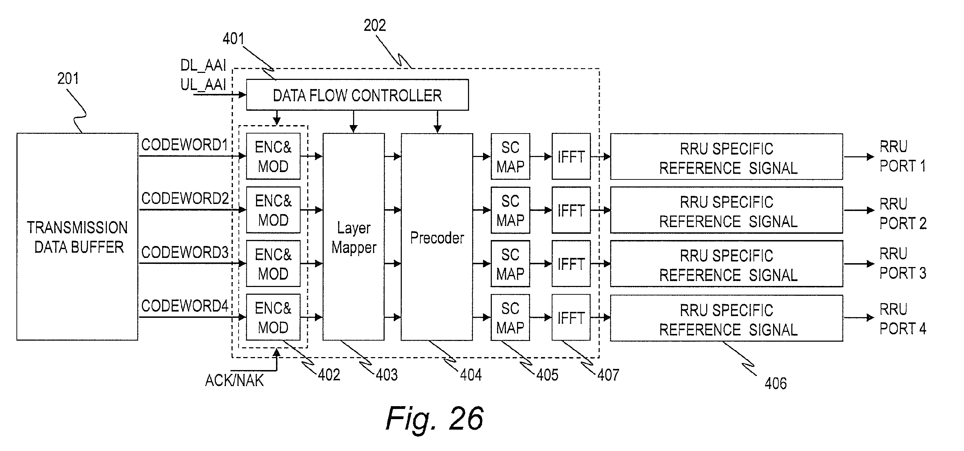

FIG. 26 is a block diagram illustrating the configuration of the baseband signal generation module 202 according to the second embodiment.

The baseband signal generation module 202 according to the second embodiment includes the data flow controller 401, the encoder/modulator 402, the layer mapper 403, the precoder 404, the SCMAP 405, and the IFFT module 407.

The baseband signal generation module 202 according to the second embodiment is different from the baseband signal generation module 202 according to the above-mentioned first embodiment illustrated in FIG. 7 in that the arrangement of the RRU specific reference signal module 406 and the IFFT module 407 is reversed. It should be noted that the respective components provided to the baseband signal generation module 202 are the same as those of the baseband signal generation module 202 according to the above-mentioned first embodiment.

In the second embodiment, the RRU specific reference signal module 406 superposes the RRU specific reference signal for power measurement in a time domain. The above-mentioned configuration of the baseband signal generation module 202 according to the second embodiment can be applied also to the case where the baseband modem 106 and the RRU 108 are directly coupled to each other as in the first embodiment illustrated in FIG. 1, but in the case where the modem-RRU switch 113 is provided as in the second embodiment illustrated in FIG. 22, the modem-RRU switch 113 is inserted between the RRU specific reference signal module 406 and the IFFT module 407.

It should be noted that the RRU specific reference signal module 406 of FIG. 26 corresponds to the power estimation reference signal inserting module 208 of FIG. 25.

Further, the precoder 404 and the subsequent components are mounted to the RRU 108 side, and the modem-RRU switch 113 may be inserted between the precoder 404 and the SCMAP 405.

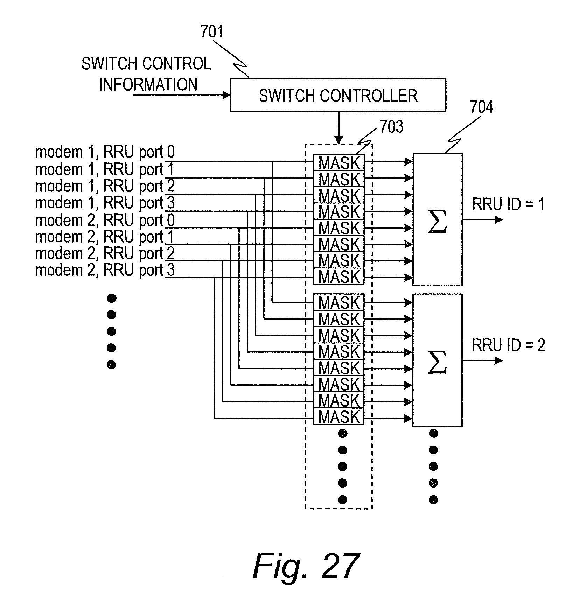

FIG. 27 is a block diagram illustrating the configuration of the modem-RRU switch 113 according to the second embodiment.

The modem-RRU switch 113 according to the second embodiment includes a switch controller 701, a mask module 703, and an adder 704, and is formed by a logic circuit. The modem-RRU switch 113 controls, according to the switch control information output by the modem control module 112, which of 0 and 1 the switch controller 701 sets for all bits of the control signals with respect to the mask modules 703 (AND masks with respect to input bit sequences) of respective data lines.

FIG. 27 illustrates the switch on a downlink communication side, but the relationship between the input and the output may be merely replaced for the switch on an uplink communication side. It should be noted that the switch 702 may be formed by another logic circuit.

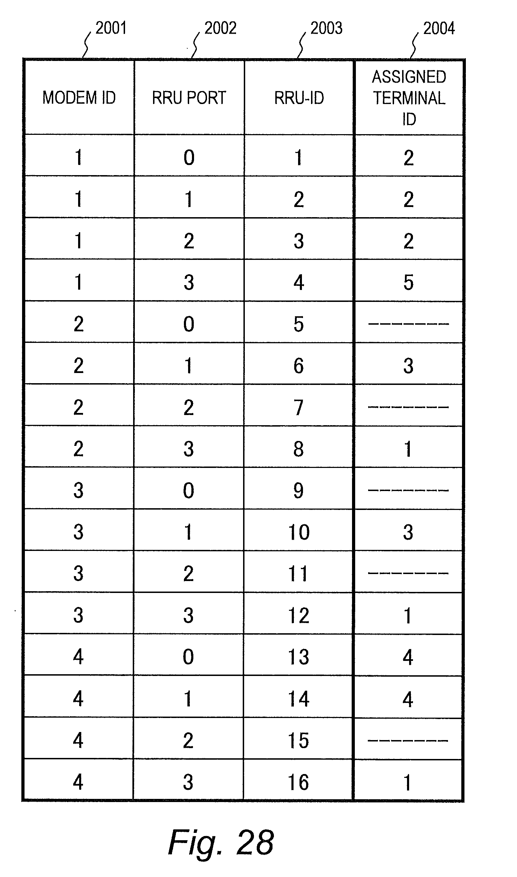

FIGS. 28 to 30 are explanatory diagrams of the RRU assignment results from a RRU mapping processing according to the second embodiment.

As illustrated in FIG. 28, if the RRU is coupled to each of at least one RRU input/output port provided to the baseband modem 106, the identifier of the terminal assigned to each of the RRUs 108 is indicated. The terminal can perform communication even in a state illustrated in FIG. 28. However, the terminals whose identifiers are 1 and 3 are simultaneously assigned to a plurality of modems. In this state, it is necessary to cause the plurality of modems to cooperate in the baseband signal processing, and it is difficult to cause the plurality of modems to cooperate in the baseband signal processing. Therefore, the coupling with the baseband modems 106 and the RRUs 108 is changed so that the baseband signal processing for each terminal 103 is performed by one baseband modem 106.

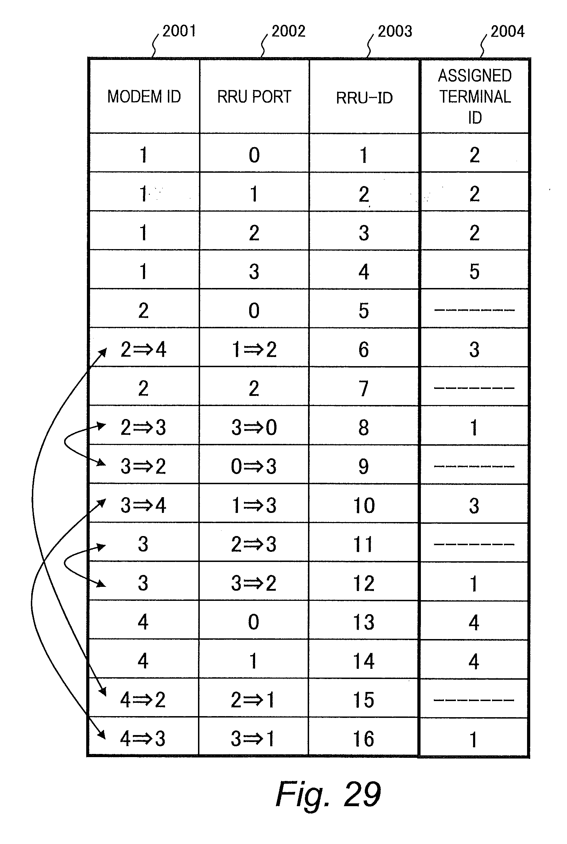

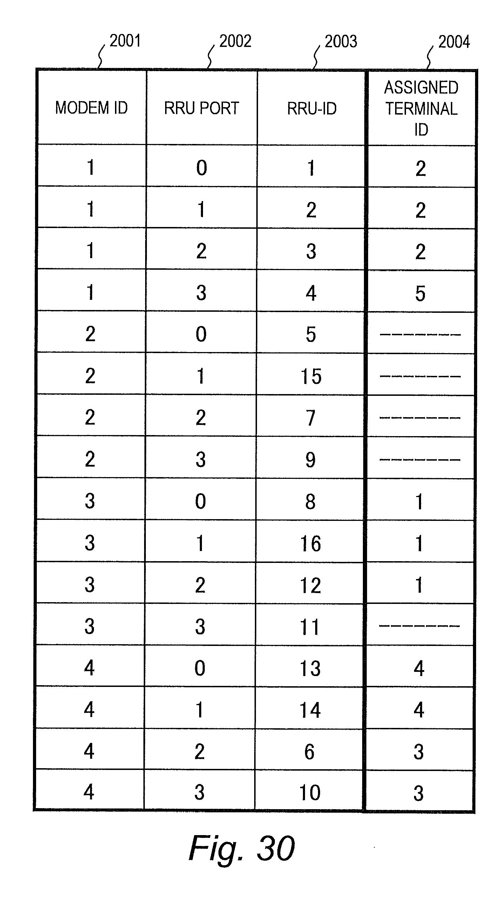

For example, as illustrated in FIG. 29, the control is performed so that the RRUs whose identifiers are 6 and 15 are replaced. In the same manner, the control is performed so that the RRUs whose identifiers are 8 and 9 are replaced, the RRUs whose identifiers are 10 and 16 are replaced, and the RRUs whose identifiers are 11 and 12 are replaced. As a result, as illustrated in FIG. 30, the baseband signal processing for each terminal is performed by one baseband modem.

At this time, the baseband modems 106 whose identifiers are 1 and 4, in which a plurality of terminals 103 are received, each form a multi-user MIMO. The multi-user MIMO is used in the LTE as the signal processing. In addition, no terminal is assigned to the baseband modem 106 whose identifier is 2, and hence the baseband modem 106 whose identifier is 2 is a modem that can be omitted (can be stopped).

As described above, according to the second embodiment of this invention, by providing the modem-RRU switch 113 to the system, the baseband modems 106 used for the communication with one terminal 103 can be consolidated into one, and the cooperative baseband signal processing among the baseband modems 106 is unnecessary. Further, the operating baseband modems 106 can be consolidated, and hence it is possible to run the baseband modems with high efficiency. Further, it is possible to reduce the number of baseband modems to be mounted to the system and therefore to reduce the power consumed by the baseband modems.

## Claims

1. A wireless communication system comprising a plurality of base stations that provide a plurality of cells respectively and communicate with a terminal, wherein,
the plurality of base stations each having one or more antennas, each of the plurality of base stations is configured to transmit a first reference signal unique to each of the plurality of antennas which does not overlap with another antenna among the plurality of base stations at least in a vicinity thereof,
the terminal is configured to:
receive the first reference signal and estimate a received power of the first reference signal for each of the plurality of antennas;
select antennas suitable for communication from among the plurality of antennas based on a result of estimating the received power; and
transmit a result of selecting the antennas to the each of the plurality of base stations; and
the each of the plurality of base stations is configured to:
refer the result of selecting the antennas transmitted from the terminal and assign the antennas belonging to different cells to the terminal; and
notify the terminal of a result of assigning the antennas.

2. The wireless communication system according to claim 1, wherein the terminal is further configured to:
reject an influence of fading by estimating the received power for each of the plurality of antennas based on a received power of a long term average of the first reference signal; and
transmit the result of selecting the antennas which includes a number of antennas and identifiers unique to the antennas to the plurality of base stations.

3. The wireless communication system according to claim 2, wherein the terminal is further configured to transmit the result of selecting the antennas which includes information indicating quality of the communication performed by the antennas to the plurality of base stations.

4. The wireless communication system according to claim 1, wherein the first reference signal includes a sequence having a low cross correlation among antennas at least in a vicinity of the terminal in order to allow the terminal to identify the reference signal transmitted from each of the plurality of antennas; and
the first reference signal is repeatedly transmitted so that the terminal can measure a received power of a long term average.

5. The wireless communication system according to claim 1, wherein the each of the plurality of base stations is further configured to notify the terminal of the result of assigning the antennas which includes at least one of a number of assigned antennas and identifiers unique to the assigned antennas.

6. The wireless communication system according to claim 5, wherein the each of the plurality of base stations is further configured to notify the terminal of the result of assigning the antennas which includes information on a modulation scheme and an encoding scheme for communication performed by the assigned antennas.

7. The wireless communication system according to claim 1, wherein
the terminal is further configured to transmit a second reference signal unique to the terminal, and
the each of the plurality of base stations is further configured to:
receive the second reference signal and estimate a received power of the second reference signal for the each of the plurality of antennas;
select antennas suitable for communication from among the plurality of antennas based on a result of estimating the received power;
refer the result of selecting the antennas and assign antennas belonging to different cells to the terminal; and
notify the terminal of a result of assigning antennas.

8. The wireless communication system according to claim 7, wherein:
each of the plurality of base stations has a plurality of baseband modems and a modem control device for controlling the plurality of baseband modems;
each of the plurality of baseband modems is configured to receives the second reference signal and measures the received power of the first reference signal for each of the plurality of antennas; and
the modem control device is configured to:
obtain at least one of the result of selecting the antennas, which has been transmitted from the terminal, and a result of measuring the received power of the second reference signal, which has been measured by the each of the plurality of baseband modems, from the plurality of baseband modems;
assign the antennas belonging to the different cells to the terminal based on the obtained information; and
notify the terminal of the result of assigning the antennas via the each of the plurality of baseband modems.

9. The wireless communication system according to claim 8, wherein the modem control means is configured to:
obtain the result of selecting the antennas, which has been transmitted from the terminal, and the result of measuring the received power of the second reference signal, which has been measured by the each of the plurality of baseband modems, from the plurality of baseband modems;
assign the antennas belonging to the different cells to the terminal to be used for downlink communication based on the obtained results of selecting the antennas;
assign the antennas belonging to the different cells to the terminal to be used for uplink communication based on the obtained results of measuring the received power of the reference signal specific to the terminal; and
notify the terminal of the result of assigning the antennas via the each of the plurality of baseband modems.

10. The wireless communication system according to claim 8, further comprising a switch device installed between the plurality of baseband modems and the plurality of antennas, for changing over a connecting between the plurality of baseband modems and the plurality of antennas, wherein
the modem control device is further configured to control the switch device based on the result of assigning the antennas.

11. The wireless communication system according to claim 10, wherein:
the switch device has a switch for uplink communication and a switch for downlink communication; and
the modem control means is configured to control separately the switch for uplink communication and the switch for downlink communication.

12. The wireless communication system according to claim 8, further comprising a reference signal adding device installed between the plurality of baseband modems and the plurality of antennas, for adding the first reference signal to a signal to be transmitted to the terminal, wherein
the reference signal adding device generates the reference signal by a sequence having a low cross correlation among the plurality of baseband modems.

13. The wireless communication system according to claim 1, wherein the terminal has:
a received-power estimation module for receiving the first reference signal transmitted from the plurality of antennas and estimating a received power of a long term average of the received first reference signal;
an antenna selection module for selecting antennas suitable for communication from among the plurality of antennas based on the received power estimated by the received-power estimation module; and
a baseband signal generation module for generating a signal including a result of selecting the antennas performed by the antenna selection module and a second reference signal unique to the terminal whose received power is to be measured by the plurality of antennas.

14. A wireless communication system comprising a plurality of base stations that provide a plurality of cells respectively and communicate with a terminal, wherein,
the plurality of base stations each having one or more antennas,
the terminal transmits a second reference signal unique to the terminal; and
each of the plurality of base stations is configured to:
receive the second reference signal and estimate a received power of the second reference signal for each of the plurality of antennas;
select antennas suitable for communication from among the plurality of antennas based on a result of estimating the received power;
refer a result of selecting the antennas and assign the plurality of antennas belonging to different cells to the terminal; and
notify the terminal of a result of assigning the antennas.

15. The wireless communication system according to claim 14, wherein the each of the plurality of base stations is further configured to notify the terminal of the result of assigning the antennas which includes at least one of a number of assigned plurality of antennas and identifiers specific to the assigned antennas.

16. The wireless communication system according to claim 15, wherein the each of the plurality of base stations is further configured to notify the terminal of the result of assigning the antennas which includes information on a modulation scheme and an encoding scheme for communication performed by the assigned antennas.

17. A wireless communication method for a wireless communication system,
the wireless communication system including a plurality of base stations that provide a plurality of cells, respectively, and a terminal that communicates with the plurality of base stations,
the plurality of base stations each having one or more antennas,
the wireless communication method including the steps of:
transmitting, by each of the plurality of base stations, a first reference signal unique to the plurality of antennas which does not overlap with another antenna among the plurality of base stations at least in a vicinity thereof;
receiving, by the terminal, the first reference signal and estimating a received power of the first reference signal for each of the plurality of antennas;
selecting, by the terminal, antennas suitable for communication from among the plurality of antennas based on a result of estimating the received power;
transmitting, by the terminal, a result of selecting the antennas to the each of the plurality of base stations;
referring, by the each of the plurality of base stations, the result of selecting the antennas transmitted from the terminal and assign the plurality of antennas belonging to different cells to the terminal; and
notifying, by the each of the plurality of base stations, the terminal of a result of assigning the antennas.

18. The wireless communication method according to claim 17, further including the steps of:
transmitting, by the terminal, a second reference signal unique to the terminal;
receiving, by the each of the plurality of base stations, the second reference signal and estimating a received power of the second reference signal for the each of the one or more antennas;
selecting, by the each of the plurality of base stations, antennas suitable for communication from among the plurality of antennas based on a result of estimating the received power;
referring, by the each of the plurality of base stations, the result of selecting the antennas and assign antennas belonging to different cells to the terminal; and
notifying, by the each of the plurality of base stations, the terminal of a result of assigning antennas.
